# EUROPEAN PATENT APPLICATION

(11) **EP 4 614 201 A1**
(43) Date of publication of application: **10.09.2025**
(21) Application number: 23896303.7
(22) Date of filing: 18.10.2023
(51) Int. Cl.: G02B 6/42

(54) **OPTICAL COMMUNICATION DEVICE, AND OPTICAL DEVICE AND ASSEMBLING METHOD THEREFOR**

(30) Priority: 01.12.2022 CN 202211525974
(71) Applicant: Huawei Technologies Co., Ltd., Shenzhen, Guangdong 518129 (CN)
(72) Inventor: GE, Zhaojiang, Shenzhen, Guangdong 518129 (CN); GAO, Fei, Shenzhen, Guangdong 518129 (CN); DONG, Hao, Shenzhen, Guangdong 518129 (CN); LI, Yangjie, Shenzhen, Guangdong 518129 (CN); LI, Jixiang, Shenzhen, Guangdong 518129 (CN); ZHOU, Yaling, Shenzhen, Guangdong 518129 (CN)
(74) Representative: MERH-IP Matias Erny Reichl Hoffmann Patentanwälte PartG mbB
(86) International application number: PCT/CN2023/125171
(87) International publication number: WO 2024/114148

(57) **Abstract**

Embodiments of this application disclose an optical communication device, an optical device, and an assembling method for the optical device, and relate to the optical communication field. The optical device includes an optical connector, a plurality of filters, a light emission apparatus, and an optical receiving apparatus. The light emission apparatus includes a first laser emitter, a second laser emitter, and a third laser emitter that emit optical signals of three different communication protocols respectively. The optical receiving apparatus includes a first optical receiver, a second optical receiver, and a third optical receiver that receive optical signals of the three different communication protocols respectively. The plurality of filters separate the optical signals that are of the three different communication protocols and that are led into through the optical connector, and lead the optical signals of the three different communication protocols into the first optical receiver respectively, the second optical receiver, and the third optical receiver; and further combine the optical signals that are of the three different communication protocols and that are emitted by the first laser emitter, the second laser emitter, and the third laser emitter and lead a combined optical signal into the optical connector. Therefore, the optical device can simultaneously receive/emit a GPON optical signal, a 10G PON optical signal, and a 50G PON optical signal.

## Description

This application claims priority to Chinese Patent Application No. 202211525974.2, filed with the China National Intellectual Property Administration on December 1, 2022, and entitled "OPTICAL COMMUNICATION DEVICE, OPTICAL DEVICE, AND ASSEMBLING METHOD FOR OPTICAL DEVICE", which is incorporated herein by reference in its entirety.

### TECHNICAL FIELD

This application relates to the field of optical communication technologies, and in particular, to an optical communication device, an optical device, and an assembling method for the optical device.

### BACKGROUND

In evolution of a PON (passive optical network, passive optical network) optical network in nearly 20 years, two generations of products of a GPON (gigabit-capable PON, gigabit-capable passive optical network) and a 10G PON (10 Gbit/s PON, 10-gigabit-capable passive optical network) are sequentially put into commercial use, and a leap from a 100 Mbit/s network to a 1000 Mbit/s network is achieved.

As an optical network requirement is continuously increased, a 50G PON (50 Gbit/s PON, 50-gigabit-capable passive optical network) product emerges in the industry. However, an existing optical transceiver cannot meet a requirement for simultaneously receiving/emitting a GPON optical signal, a 10G PON optical signal, and a 50G PON optical signal.

### SUMMARY

Embodiments of this application provide an optical communication device, an optical device, and an assembling method for the optical device, to meet a requirement for simultaneously receiving/emitting a GPON optical signal, a 10G PON optical signal, and a 50G PON optical signal.

To achieve the foregoing objective, the following technical solutions are used in this application:

According to a first aspect, an embodiment of this application provides an optical device. The optical device includes an optical connector, a light emission apparatus, an optical receiving apparatus, and a plurality of filters. The light emission apparatus includes a first laser emitter, a second laser emitter, and a third laser emitter. The first laser emitter, the second laser emitter, and the third laser emitter are respectively configured to emit optical signals of three different communication protocols. The three different communication protocols may be a first communication protocol used for a 10G PON protocol, a second communication protocol used for a 50G PON protocol, and a third communication protocol used for a GPON protocol. Therefore, the first communication protocol includes a modulation optical signal whose receiving rate is 10 Gbps and whose wavelength ranges from 1260 nm to 1280 nm, and a received modulation electrical signal whose rate is 10 Gbps is converted, for emission, into a modulation optical signal whose wavelength ranges from 1575 nm to 1580 nm. The second communication protocol includes a modulation optical signal whose receiving rate is 50 Gbps and whose wavelength ranges from 1284 nm to 1288 nm, and a received modulation electrical signal whose rate is 50 Gbps is converted, for emission, into a modulation optical signal whose wavelength ranges from 1340 nm to 1344 nm. The third communication protocol includes a modulation optical signal whose receiving rate is 1.25 Gbps and whose wavelength ranges from 1290 nm to 1330 nm, and a received modulation electrical signal whose rate is 2.5 Gbps is converted, for emission, into a modulation optical signal whose wavelength ranges from 1480 nm to 1490 nm. In addition to the three communication protocols, optical signals that are of the three different communication protocols and that are emitted by the first laser emitter, the second laser emitter, and the third laser emitter in this embodiment of this application may be of another communication protocol. Details are not described herein again.

In addition, the optical receiving apparatus includes a first optical receiver, a second optical receiver, and a third optical receiver. The first optical receiver, the second optical receiver, and the third optical receiver are configured to receive optical signals of the three different communication protocols. The received optical signals of the three different communication protocols herein may also be an optical signal of the first communication protocol, an optical signal of the second communication protocol, and an optical signal of the third communication protocol, or an optical signal of another communication protocol. An optical signal of each communication protocol may be received by one optical receiver in the optical device and emitted by one laser emitter.

The optical device further includes the plurality of filters, and the plurality of filters are disposed at intervals. The plurality of filters include a first filter group, a second filter group, a third filter group, and a fourth filter group. The first filter group is located on a receiving optical path of the first optical receiver, and is configured to: lead, into the first optical receiver, an optical signal of a first communication protocol in the optical signals that include the three different communication protocols and that are led into from the optical connector, and lead out an optical signal of a second communication protocol and an optical signal of a third communication protocol in the optical signals of the three different communication protocols. The second filter group is located on an optical path from the first filter group to the second optical receiver, and is configured to: lead, into the second optical receiver, an optical signal that is of one communication protocol and that is transmitted by the first filter group, and allow an optical signal of the other communication protocol to be led out. The third filter group is located on an optical path from the second filter group to the third optical receiver, and is configured to lead, into the third optical receiver, the optical signal led out from the second filter group. Therefore, the optical device in this embodiment of this application may meet a requirement for simultaneously receiving a GPON optical signal, a 10G PON optical signal, and a 50G PON optical signal. The fourth filter group is located on emergent optical paths of the first laser emitter, the second laser emitter, and the third laser emitter. The fourth filter group is configured to: combine an optical signal that is of the first communication protocol and that is emitted by the first laser emitter, an optical signal that is of the first communication protocol and that is emitted by the second laser emitter, and an optical signal that is of the third communication protocol and that is emitted by the third laser emitter, and lead a combined optical signal into the optical connector. Therefore, the optical device in this embodiment of this application may meet a requirement for simultaneously emitting a GPON optical signal, a 10G PON optical signal, and a 50G PON optical signal.

In addition, the optical device further includes a housing, and the plurality of filters are all located in the housing. The optical connector, the light emission apparatus, and the optical receiving apparatus may be disposed on the housing. For example, an optical port of the optical connector, a light emergent port of the light emission apparatus, and a light incident port of the optical receiving apparatus are all located in the housing. When the plurality of filters are mounted in the housing, an assembling error easily occurs, and a demultiplexing curve of the filters changes, resulting in inaccurate demultiplexing. Especially, for filters with a small spacing, optical splitting accuracy of an optical path is seriously affected. Therefore, in some embodiments, a mounting surface is formed on an inner wall of the housing. A side face of at least one of the plurality of filters is bonded to the mounting surface. When the filter is bonded to the mounting surface, a sideline or a corner of the filter may be used as an adjustment reference, so that a mounting location and a mounting angle of the filter are accurate. Therefore, a mounting error of the plurality of filters may be reduced to a value less than ±0.3°, and demultiplexing accuracy of the filter in the optical device is ensured.

In some embodiments of this application, the optical device further includes a Z-block filter assembly, and the Z-block filter assembly includes at least one of the plurality of filters and an adjustment support kit. All filters in the Z-block filter assembly may be disposed on the adjustment support kit. The adjustment support kit may be specifically an adjustment prism or an adjustment support. The adjustment support kit may be connected to the housing in a bonding manner. Similarly, when the adjustment support kit is bonded to the inner wall of the housing, a sideline or a corner of the adjustment support kit may be used as an adjustment reference, so that a mounting location and a mounting angle of all the filters in the Z-block filter assembly are accurate. Therefore, a mounting error of the plurality of filters may be reduced to a value less than ±0.3°, and demultiplexing accuracy of the filter in the optical device is ensured.

In addition, in some other embodiments, the optical device further includes one or more adjustment frames, and the adjustment frame may be connected to the inner wall of the housing. For example, the adjustment frame is connected to the inner wall of the housing in a bonding manner. In addition, a quantity of adjustment frames may be equal to a quantity of filters, or a quantity of adjustment frames is less than a quantity of filters. If there is only one adjustment frame, one of the plurality of filters is mounted on the adjustment frame. If there are a plurality of adjustment frames and the quantity of adjustment frames is equal to the quantity of filters, the plurality of filters may be assembled in one-to-one correspondence with the plurality of adjustment frames. If there are a plurality of adjustment frames and the quantity of adjustment frames is less than the quantity of filters, some of the plurality of filters may be assembled in one-to-one correspondence with the plurality of adjustment frames. Therefore, this adapts to different space sizes in the housing when demultiplexing accuracy of the filter in the optical device is ensured.

In addition, in some embodiments, the adjustment frame may be used to manually adjust the mounting angle. In some other embodiments, the optical device further includes a driving piece, for example, a driving motor, and the driving piece is connected to the adjustment frame in a driving manner. In this case, the mounting angle of the filter is automatically adjusted.

A distribution of the plurality of filters changes with a packaging form and a distribution manner of the light emission apparatus and the optical receiving apparatus in the optical device. In some embodiments, the first filter group includes a first filter and a second filter that are sequentially disposed in a light incident direction of the first optical receiver. The first filter is disposed opposite to the optical connector, and is configured to: reflect, to the second filter, the optical signal of the first communication protocol in the optical signals that include the three different communication protocols in optical signals led into through the optical connector, and allow transmission of the optical signal of the second communication protocol and the optical signal of the third communication protocol in the optical signals that include the three different communication protocols. The second filter is configured to reflect, to the first optical receiver, the optical signal reflected by the first filter. The second filter group includes a third filter and a fourth filter that are sequentially disposed in a light incident direction of the second optical receiver; the third filter is located on a transmission optical path of the first filter, and is configured to: reflect, to the fourth filter, the optical signal that is of the second communication protocol and that is transmitted by the first filter, and allow transmission of the optical signal of the third communication protocol; and the fourth filter is configured to reflect, to the second optical receiver, the optical signal reflected by the third filter. The third filter group includes a fifth filter and a sixth filter that are sequentially disposed in a light incident direction of the third optical receiver. The fifth filter is located on a transmission optical path of the third filter, and is configured to reflect, to the sixth filter, the optical signal that is of the third communication protocol and that is transmitted by the third filter. The sixth filter is configured to reflect, to the optical receiver, the optical signal reflected by the fifth filter.

In addition, the fifth filter, the third filter, and the first filter are all located on an optical path between the light emission apparatus and the optical connector, and are sequentially disposed in a light emergent direction of the light emission apparatus. The fifth filter, the third filter, and the first filter are further configured to allow, to be combined and led into the optical connector, the optical signal that is of the first communication protocol and that is emitted by the first laser emitter, the optical signal that is of the second communication protocol and that is emitted by the second laser emitter, and the optical signal that is of the third communication protocol and that is emitted by the third laser emitter.

Based on the foregoing descriptions, in some embodiments, the first filter group further includes a seventh filter located on a reflection optical path of the second filter, and the seventh filter is disposed opposite to the first optical receiver, and is configured to: filter out an impurity optical signal in the optical signal reflected by the second filter, and allow the filtered optical signal to be transmitted to the first optical receiver, to prevent the impurity optical signal from entering the first optical receiver, the second optical receiver, and the third optical receiver. The second filter group further includes an eighth filter located on a reflection optical path of the fourth filter, and the eighth filter is disposed opposite to the second optical receiver, and is configured to: filter out an impurity optical signal in the optical signal reflected by the fourth filter, and allow the filtered optical signal to be transmitted to the second optical receiver. The third filter group further includes a ninth filter located on a reflection optical path of the sixth filter, and the ninth filter is disposed opposite to the third optical receiver, and is configured to: filter out an impurity optical signal in the optical signal reflected by the sixth filter, and allow the filtered optical signal to be transmitted to the third optical receiver.

Based on the distribution of the filters, for an optical device with small space in the housing, the optical device further includes three adjustment frames connected to an inner wall of the housing. The three adjustment frames are a first adjustment frame, a second adjustment frame, and a third adjustment frame. The second filter is mounted on the first adjustment frame. The fourth filter is mounted on the second adjustment frame. The sixth filter is mounted on the third adjustment frame. Therefore, according to the optical device, the mounting error of the plurality of filters may be reduced to a value less than ±0.3°, and demultiplexing accuracy of the filter in the optical device is ensured.

In some other embodiments of this application, the first filter group includes a first filter, a second filter, and a third filter that are sequentially disposed in a light incident direction of the first optical receiver. The first filter is disposed opposite to the optical connector, and the first filter is configured to reflect, to the second filter, the optical signals that include the three different communication protocols and that are led into through the optical connector. The second filter is configured to reflect, to the third filter, the optical signals that include the three different communication protocols. The third filter is configured to: reflect the optical signal of the second communication protocol and the optical signal of the third communication protocol in the optical signals that include the three different communication protocols and that are reflected by the second filter, and allow, to be transmitted to the first optical receiver, the optical signal of the first communication protocol in the optical signals that include the three different communication protocols. The second filter group includes a fourth filter located on an optical path from the third filter to the second optical receiver. The fourth filter is configured to: reflect the optical signal of the third communication protocol in the optical signals reflected by the third filter, and allow the optical signal of the second communication protocol to be transmitted to the second optical receiver. The third filter group includes a fifth filter located on an optical path from the fourth filter to the third optical receiver. The fifth filter is configured to reflect, to the third optical receiver, the optical signal that is of the third communication protocol and that is reflected by the fourth filter.

In addition, based on this, the first filter is located on the optical path between the light emission apparatus and the optical connector. The first filter is further configured to allow, to be combined and led into the optical connector, the optical signal that is of the first communication protocol and that is emitted by the first laser emitter, the optical signal that is of the second communication protocol and that is emitted by the second laser emitter, and the optical signal that is of the third communication protocol and that is emitted by the third laser emitter.

Similarly, the first filter group further includes a sixth filter located on the transmission optical path of the third filter, and the sixth filter is disposed opposite to the first optical receiver, and is configured to: filter out the impurity optical signal in the optical signal transmitted by the third filter, and transmit the optical signal to the first optical receiver, to prevent the impurity optical signal from entering the first optical receiver, the second optical receiver, and the third optical receiver. The second filter group further includes a seventh filter located on the transmission optical path of the fourth filter, and the seventh filter is disposed opposite to the second optical receiver, and is configured to: filter out an impurity optical signal in the optical signal transmitted by the fourth filter, and transmit the optical signal to the second optical receiver. The third filter group further includes an eighth filter located on a reflection optical path of the fifth filter, and the eighth filter is disposed opposite to the third optical receiver, and is configured to: filter out an impurity optical signal in the optical signal reflected by the fifth filter, and transmit the optical signal to the third optical receiver.

Based on the distribution of the filters, for an optical device with small space in the housing, the optical device further includes three adjustment frames connected to an inner wall of the housing. The three adjustment frames are a first adjustment frame, a second adjustment frame, and a third adjustment frame. The second filter is mounted on the first adjustment frame. The third filter is mounted on the second adjustment frame. The fourth filter or the fifth filter is mounted on the third adjustment frame. Therefore, according to the optical device, the mounting error of the plurality of filters may be reduced to a value less than ±0.3°, and demultiplexing accuracy of the filter in the optical device is ensured.

Based on the foregoing descriptions, in some embodiments of this application, an optical path from the second laser emitter to the optical connector intersects with an optical path from the third laser emitter to the optical connector. The plurality of filters further include a tenth filter and an eleventh filter. The tenth filter is disposed at an intersection of the optical path from the second laser emitter to the optical connector and the optical path from the third laser emitter to the optical connector. The tenth filter is configured to combine and lead out the optical signal that is of the second communication protocol and that is emitted by the second laser emitter and the optical signal that is of the third communication protocol and that is emitted by the third laser emitter. An optical path from the first laser emitter to the optical connector intersects with an emergent optical path of the tenth filter. The eleventh filter is disposed at an intersection of the optical path from the first laser emitter to the optical connector and the emergent optical path of the tenth filter. In addition, the eleventh filter is configured to: combine an optical signal led out from the tenth filter and the optical signal that is of the first communication protocol and that is emitted by the first laser emitter, and lead a combined optical signal into the optical connector.

In addition, in some embodiments of this application, the optical device further includes a first collimating lens and a second collimating lens, and the first collimating lens is disposed at an optical port that is of the optical connector and that is close to an inner side of the housing. The second collimating lens is disposed on emergent optical paths of the first laser emitter, the second laser emitter, and the third laser emitter. The second collimating lens is configured to convert, from converged light to parallel light, the optical signals emitted by the first laser emitter, the second laser emitter, and the third laser emitter. The first collimating lens is configured to convert, into parallel light, converged light led into through the optical connector, and is further configured to convert, into converged light, the parallel light emergent via the second collimating lens.

In addition, in some embodiments of this application, the optical device further includes an isolator, and the isolator is disposed on the emergent optical path of each of the first laser emitter, the second laser emitter, and the third laser emitter. In some examples, there is one isolator, and the isolator is disposed at an intersection location of an emergent optical path of the first laser emitter, an emergent optical path of the second laser emitter, and an emergent optical path of the third laser emitter. For example, the isolator is located between an emergent optical path of the eleventh filter and the second collimating lens. The isolator may simultaneously avoid optical signal crosstalk for the first laser emitter, the second laser emitter, and the third laser emitter. In some other examples, there may be three isolators, and the three isolators are respectively disposed on the emergent optical path of the first laser emitter, the emergent optical path of the second laser emitter, and the emergent optical path of the third laser emitter. Therefore, the three isolators can avoid optical signal crosstalk for corresponding laser emitters independently respectively.

In some embodiments of this application, the first laser emitter, the second laser emitter, and the third laser emitter in the light emission apparatus each are independently packaged and disposed, and are distributed on the housing at intervals.

In some embodiments of this application, any two of the first laser emitter, the second laser emitter, and the third laser emitter in the light emission apparatus are integrated into an integral structure, and the remaining one is independently packaged and disposed. The light emission apparatus has a small volume. This is conducive to miniaturization of the optical device.

In some embodiments of this application, the first laser emitter, the second laser emitter, and the third laser emitter in the light emission apparatus are integrally packaged into an integral structure. The light emission apparatus has a small volume. This is conducive to miniaturization of the optical device.

Similarly, in some embodiments of this application, the first optical receiver, the second optical receiver, and the third optical receiver each are independently packaged and disposed, and are distributed on the housing at intervals.

In some embodiments of this application, any two of the first optical receiver, the second optical receiver, and the third optical receiver in the optical receiving apparatus are integrally packaged into an integral structure, and the remaining one is independently packaged and disposed. The optical receiving apparatus has a small volume. This is conducive to miniaturization of the optical device.

In some embodiments of this application, the first optical receiver, the second optical receiver, and the third optical receiver in the optical receiving apparatus are integrally packaged into an integral structure. The optical receiving apparatus has a small volume. This is conducive to miniaturization of the optical device.

Based on the foregoing descriptions, regardless of whether the first laser emitter, the second laser emitter, the third laser emitter, the first optical receiver, the second optical receiver, and the third optical receiver are independently packaged or integrally packaged, a packaging form may be coaxial packaging or box packaging.

According to a second aspect, an embodiment of this application further includes an optical communication device. The optical communication device may be a PON device, for example, an optical line terminal device, an optical network unit device, or an optical network device, or may be an optical module. The optical communication device includes a circuit board and the optical device described in the foregoing embodiment, and the optical device is electrically connected to the circuit board. Because the optical device in the optical communication device in this embodiment of this application and the optical device in the foregoing embodiment have a same structure, and both can resolve a same technical problem, to obtain a same technical effect. Details are not described herein again.

According to a third aspect, an embodiment of this application includes an assembling method for the optical device in the foregoing embodiment. The assembling method specifically includes the following steps: mounting a plurality of filters at preset reference locations in a housing, where at least one filter is fixedly mounted on an adjustment frame, and the adjustment frame is movably connected to the housing; inputting detection light into an optical connector, and sequentially adjusting mounting angles of the filters by using the adjustment frame in an optical path sequence, until an angle at which a beam of the detection light led out from or led into the plurality of filters reaches a preset angle; and fastening the adjustment frame to the housing.

According to a fourth aspect, an embodiment of this application further includes another assembling method for the optical device in the foregoing embodiment. The assembling method specifically includes the following steps: performing glue dispensing on a mounting surface in the housing based on a preset mounting location of a filter in a housing; attaching a side face of the filter to an adhesive layer on the mounting surface, and adjusting a mounting angle of the filter by using a sideline or a corner of the filter as a mounting reference, until the mounting angle reaches a preset mounting angle; and curing the adhesive layer between the side face of the filter and the mounting surface.

According to a fifth aspect, an embodiment of this application further includes another assembling method for the optical device in the foregoing embodiment. The assembling method specifically includes the following steps: movably mounting a filter and a Z-block filter assembly at preset reference locations in a housing; inputting detection light into an optical connector, and adjusting a mounting angle of the Z-block filter assembly in the housing, until an angle at which a beam of the detection light led out from the filter and the Z-block filter assembly reaches a preset angle; and fastening the Z-block filter assembly and the housing.

### BRIEF DESCRIPTION OF DRAWINGS

To describe technical solutions in embodiments of this application, the following briefly describes accompanying drawings required for embodiments of this application.
FIG. 1 is a schematic diagram of a structure existing when an optical communication device is an optical modem according to an embodiment of this application;
FIG. 2 is a schematic diagram of a structure of a circuit board assembly in an optical communication device according to an embodiment of this application;
FIG. 3 is a schematic diagram of a structure of an optical device including one laser emitter and one optical receiver;
FIG. 4 is a schematic diagram of a structure of an optical device including two laser emitters and two optical receivers;
FIG. 5 is a schematic diagram of a cross-section of an optical device according to an embodiment of this application;
FIG. 6 is a schematic diagram of a three-dimensional structure of a housing in an optical device according to an embodiment of this application;
FIG. 7 is a schematic diagram of a partial structure of an optical device in which a filter is mounted on a fastening frame;
FIG. 8 is a schematic diagram of a cross-section of an optical device whose housing has a mounting surface according to an embodiment of this application;
FIG. 9 is a schematic diagram of a three-dimensional structure of a filter in an optical device according to an embodiment of this application;
FIG. 10 is a schematic diagram of a structure in which a filter in an optical device is bond to a mounting surface of a housing according to an embodiment of this application;
FIG. 11 is a schematic diagram of a cross-section of an optical device including a Z-block filter assembly according to an embodiment of this application;
FIG. 12 is a schematic diagram of a three-dimensional structure of a Z-block filter assembly in an optical device according to an embodiment of this application;
FIG. 13 is a schematic diagram of a structure of an assembly of a filter and an adjustment frame in an optical device from a first perspective according to an embodiment of this application;
FIG. 14 is a schematic diagram of a structure of an assembly of a filter and an adjustment frame in an optical device from a second perspective according to an embodiment of this application;
FIG. 15 is a diagram of demonstrating adjustment of an angle of a filter in an optical device according to an embodiment of this application;
FIG. 16 is a schematic diagram of an assembly of a filter and a driving piece in an optical device according to an embodiment of this application;
FIG. 17 is a schematic diagram of an optical path between an optical receiving apparatus and an optical connector in an optical device in Example 1;
FIG. 18 is a schematic diagram of an optical path between a light emission apparatus and an optical connector in an optical device in Example 1;
FIG. 19 is a schematic diagram of an optical path between an optical receiving apparatus and an optical connector in an optical device having a parasitic light filtering function in Example 1;
FIG. 20 is a schematic diagram of an optical path between a light emission apparatus and an optical connector in an optical device having a parasitic light filtering function in Example 1;
FIG. 21 is a schematic diagram of a structure of an optical device including three adjustment frames in Example 1;
FIG. 22 is a schematic diagram of a structure of an optical device whose housing has a mounting surface in Example 1;
FIG. 23 is a schematic diagram of a structure of an optical device in Example 2;
FIG. 24 is a schematic diagram of a structure of an optical device in Example 3;
FIG. 25 is a schematic diagram of an optical path between an optical receiving apparatus and an optical connector in an optical device in Example 4;
FIG. 26 is a schematic diagram of an optical path between a light emission apparatus and an optical connector in an optical device in Example 4;
FIG. 27 is a schematic diagram of an optical path between an optical receiving apparatus and an optical connector in an optical device having a parasitic light filtering function in Example 4;
FIG. 28 is a schematic diagram of an optical path between a light emission apparatus and an optical connector in an optical device having a parasitic light filtering function in Example 4;
FIG. 29 is a schematic diagram of a structure of an optical device including three adjustment frames in Example 4;
FIG. 30 is a schematic diagram of a structure of an optical device in Example 5;
FIG. 31 is a schematic diagram of a structure of an optical device in Example 6;
FIG. 32 is a schematic diagram of a structure of an optical device in Example 7;
FIG. 33 is a schematic diagram of a structure of an optical device in Example 8;
FIG. 34 is a schematic diagram of a structure of an optical device in Example 9; and
FIG. 35 is a schematic diagram of a structure of an optical device in Example 10.

Reference numerals:
1000: Optical modem; 100: Circuit board; 200: Optical device; 10: Housing; 101: Fastening frame; 102: Mounting surface; 1: Optical connector; 2: Light emission apparatus; 20/20a/20b: Laser emitter; 21: First laser emitter; 22: Second laser emitter; 23: Third laser emitter; 3: Optical receiving apparatus; 30/30a/30b: Optical receiver; 31: First optical receiver; 32: Second optical receiver; 33: Third optical receiver; 4: Optical film assembly; 41: A plurality of filters; 410: Filter; 4101/4101a: Side face; 41a: First filter group; 41b: Second filter group; 41c: Third filter group; 41d: Fourth filter group; 411: First filter; 412: Second filter; 413: Third filter; 414: Fourth filter; 415: Fifth filter; 416: Sixth filter; 417: Seventh filter; 418: Eighth filter; 419: Ninth filter; 420: Tenth filter; 421: Eleventh filter; 422: Twelfth filter; 42: Isolator; 42a: First isolator; 42b: Second isolator; 42c: Third isolator; 43: Collimating lens; 431: First collimating lens; 432: Second collimating lens; 40: Z-block filter assembly; 40a: First Z-block filter assembly; 40b: Second Z-block filter assembly; 401: Adjustment support kit; 401a: First adjustment support kit; 401b: Second adjustment support kit; 402: Reflective film/Reflector; 4021: First reflective film; 4022: Second reflective film; 4023: Third reflective film; 4024: Fourth reflective film; 5: Adjustment frame; 501: First adjustment frame; 502: Second adjustment frame; 503: Third adjustment frame; 51: Mounting bracket; 52: Adjustment base; 521: Adjustment slot; and 6: Driving piece.

### DESCRIPTION OF EMBODIMENTS

To make the objectives, technical solutions, and advantages of this application clearer, the following further describes this application in detail with reference to the accompanying drawings.

The terms such as "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

In addition, in this application, directional terms such as "up", "down", "left", "right", "horizontal", and "vertical" are defined relative to a direction in which components are schematically placed in the accompanying drawings. It should be understood that, these directional terms are relative concepts that are used for relative description and clarification, and may vary accordingly based on changes of the direction in which the components are placed in the accompanying drawings.

In this application, unless otherwise specified and limited, the term "connection" should be understood in a broad sense. For example, the term "connection" may be a connection of a mechanical structure or a connection of a physical structure. For example, the connection may be a fixed connection, a detachable connection, an integration, a direct connection, or an indirect connection by using an intermediate medium. The connection may also be understood as that components are in contact physically and electrically conductive, or may be understood as that different components in a line structure are connected through a physical line that may perform electrical signal transmission, for example, a PCB copper foil or a conducting wire.

An embodiment of this application includes an optical communication device. The optical communication device may be a PON device, for example, an optical line terminal (optical line terminal, OLT) device, an optical network unit (optical network unit, ONU) device, an optical network device (Optical network terminal, ONT), or an optical module (optical transceiver). The optical network device may be specifically an optical modem. The optical module may be used in an optical line terminal device, or may be used in a communication network device, for example, a router. In addition, the optical module may be an on-board optical module, or may be a pluggable optical module.

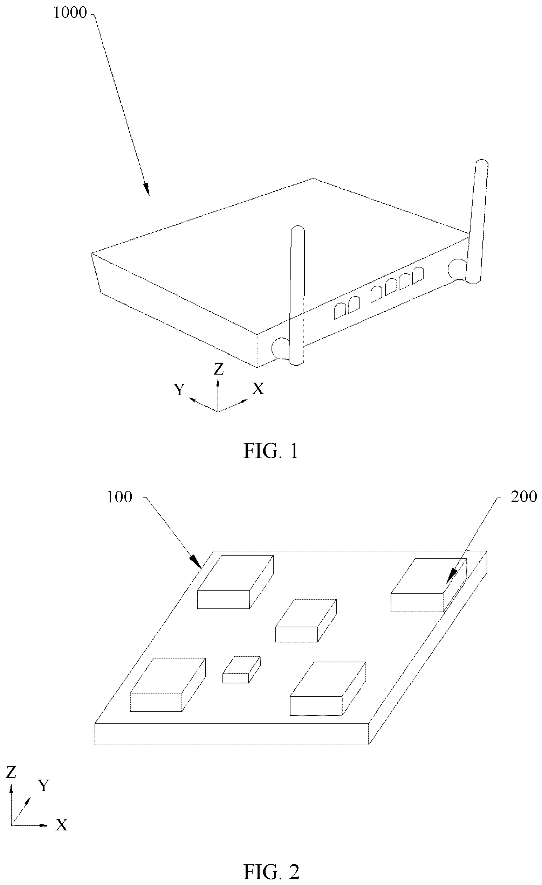

FIG. 1 shows a solution in which an optical communication device is an optical modem. An optical modem 1000 includes a circuit board 100 and an optical device 200 shown in FIG. 2. The optical device 200 is electrically connected to the circuit board 100. The optical device 200 may be specifically an optical transceiver device. The circuit board 100 further has another circuit, a chip, a chip package structure, or the like. Details are not described one by one herein. The optical device 200 may perform signal transmission with the another circuit, the chip, or the chip package structure on the circuit board 100.

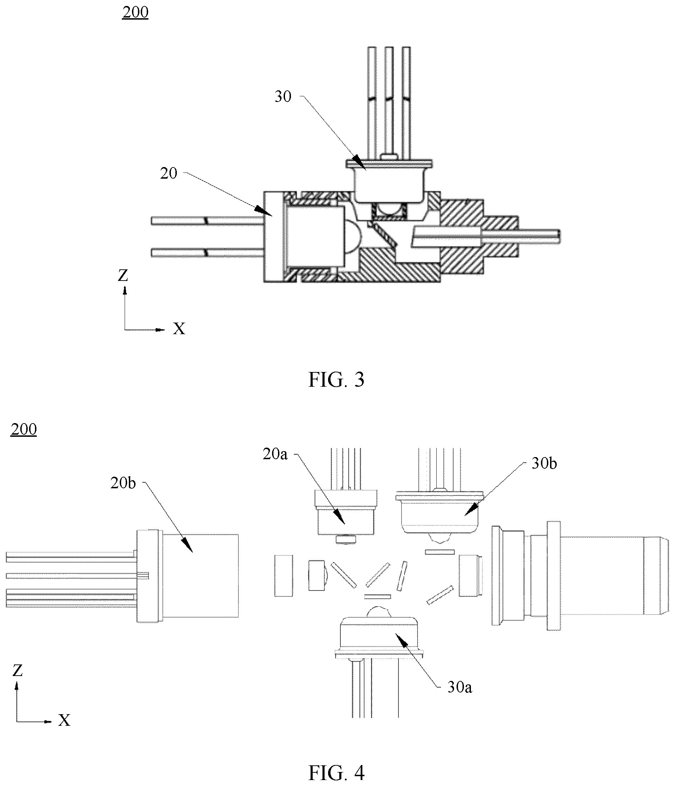

To meet a receiving/emitting requirement of an optical communication network of optical signals that includes different communication protocols, the optical transceiver device may be of different structures. For example, when an optical signal of only one communication protocol needs to be received and sent, as shown in FIG. 3, the optical device 200 may include one laser emitter 20 and one optical receiver 30. For example, the laser emitter 20 is configured to emit an optical signal of a GPON protocol. The optical receiver 30 is configured to receive an optical signal of the GPON protocol.

When optical signals of two different communication protocols need to be received and sent, as shown in FIG. 4, the optical device 200 may include two laser emitters 20a and 20b and two optical receivers 30a and 30b. The two optical receivers 30a and 30b are respectively configured to receive optical signals of two different communication protocols. The two laser emitters 20a and 20b are respectively configured to send optical signals of two different communication protocols. For example, the laser emitter 20a is configured to emit an optical signal of a GPON protocol. The laser emitter 20b is configured to send an optical signal of a 10G PON protocol. The optical receiver 30a is configured to receive an optical signal of the GPON protocol. The optical receiver 30b is configured to receive an optical signal of the 10G PON protocol. Therefore, the optical device 200 is a combo PON device, and may meet a requirement for simultaneously receiving/emitting a GPON optical signal and a 10G PON optical signal.

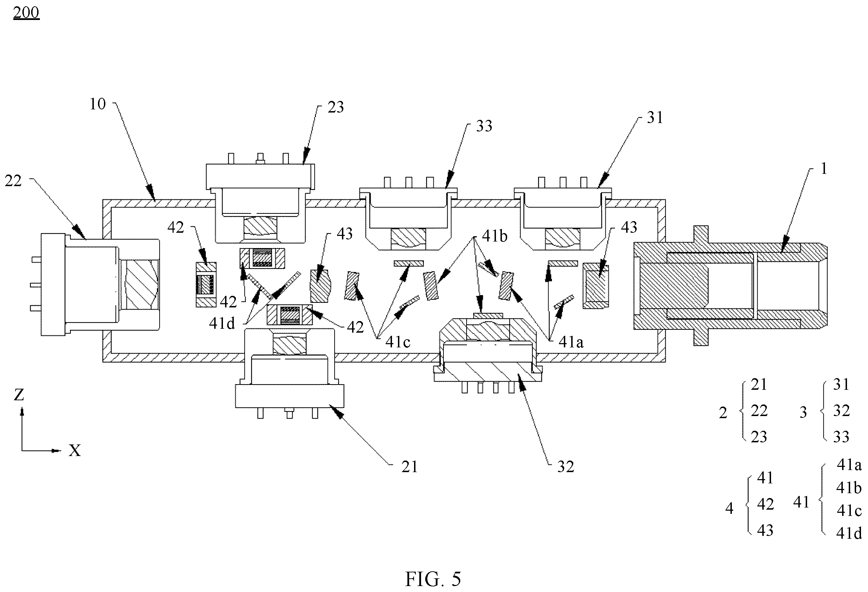

However, as an optical network requirement is continuously increased, a 50G PON communication device emerges in the industry. An embodiment of this application provides an optical device 200, to meet a requirement for simultaneously receiving/emitting a GPON optical signal, a 10G PON optical signal, and a 50G PON optical signal. As shown in FIG. 5, the optical device 200 includes a housing 10, an optical connector 1, a light emission apparatus 2, and an optical receiving apparatus 3.

The housing 10 may serve as a support structure. The optical connector 1, the light emission apparatus 2, and the optical receiving apparatus 3 may be all mounted on the housing 10. An optical port of the optical connector 1, a light emergent port of the light emission apparatus 2, and a light incident port of the optical receiving apparatus 3 are all located in the housing 10.

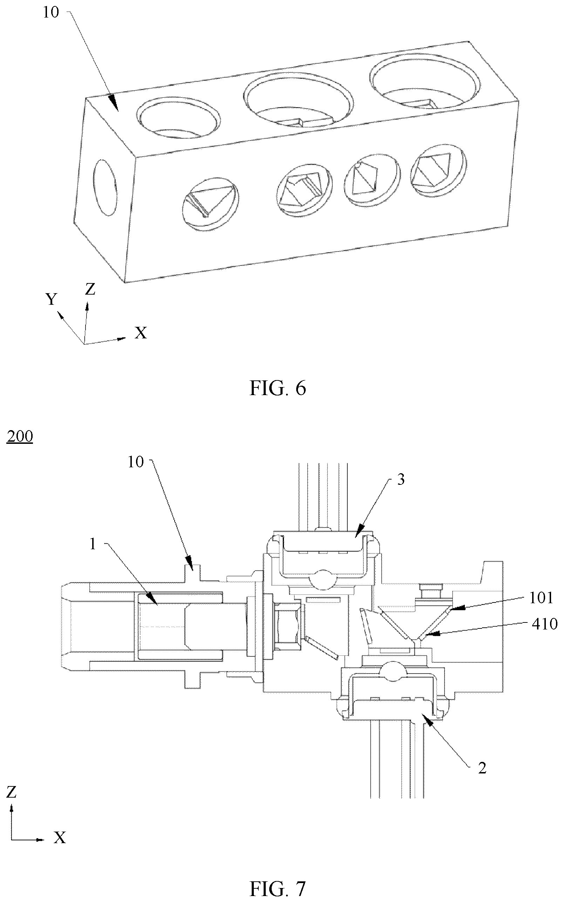

For example, the housing 10 shown in FIG. 6 is cuboid-shaped. The housing 10 may also be manufactured into another shape that facilitates mounting of the optical connector 1, the light emission apparatus 2, and the optical receiving apparatus 3. This is not limited in this application.

An external optical signal may be led into the optical connector 1. The optical signal may be a detection optical signal, and the detection optical signal is used for assembling and debugging of the optical device 200. The optical signal may also be a modulation optical signal that carries transmission data. For example, the optical connector 1 may have a coaxial fiber. The optical signal may be led into the optical device 200 through the coaxial fiber. The optical connector 1 may further send out an optical signal emitted by the light emission apparatus 2.

As shown in FIG. 5, the light emission apparatus 2 includes a first laser emitter 21, a second laser emitter 22, and a third laser emitter 23. The first laser emitter 21, the second laser emitter 22, and the third laser emitter 23 are respectively configured to emit optical signals of three different communication protocols.

The optical receiving apparatus 3 includes a first optical receiver 31, a second optical receiver 32, and a third optical receiver 33. The first optical receiver 31, the second optical receiver 32, and the third optical receiver 33 are configured to receive optical signals of the three different communication protocols.

The housing 10 further includes an optical film assembly 4 shown in FIG. 5, and the optical film assembly 4 is mounted in the housing 10. The optical film assembly 4 includes a plurality of filters 41, and the plurality of filters 41 may be distributed in the housing 10 at intervals. The plurality of filters 41 include a first filter group 41a, a second filter group 41b, a third filter group 41c, and a fourth filter group 41d.

The first filter group 41a is located on a receiving optical path of the first optical receiver 31. The first filter group 41a is configured to: lead, into the first optical receiver 31, an optical signal of a first communication protocol in the optical signals that are of the three different communication protocols and that are led into from the optical connector 1, and allow an optical signal of a second communication protocol and an optical signal of a third communication protocol in the optical signals of the three different communication protocols to be led out.

The second filter group 41b is located on an optical path from the first filter group 41a to the second optical receiver 32. The second filter group 41b is configured to: lead, into the second optical receiver 32, an optical signal that is of one communication protocol and that is led out from the first filter group 41a, and allow, to be led out, an optical signal that is of the other communication protocol and that is led out from the first filter group 41a.

The third filter group 41c is located on an optical path from the second filter group 41b to the third optical receiver 33. The third filter group 41c is configured to lead, into the third optical receiver 33, the optical signal transmitted from the second filter group 41b.

The fourth filter group 41d is located on emergent optical paths of the first laser emitter 21, the second laser emitter 22, and the third laser emitter 23. The fourth filter group 41d is configured to: combine an optical signal that is of the first communication protocol and that is emitted by the first laser emitter 21, an optical signal that is of the second communication protocol and that is emitted by the second laser emitter 22, and an optical signal that is of the third communication protocol and that is emitted by the third laser emitter 23, and lead a combined optical signal into the optical connector 1.

Therefore, the optical device 200 in this embodiment of this application may separate, by using the first filter group 41a, the second filter group 41b, and the third filter group 41c, the optical signals that are of the three different communication protocols and that are led into from the optical connector 1, and lead the optical signals into the first optical receiver 31, the second optical receiver 32, and the third optical receiver 33 respectively. Further, the optical signals that are of the three different communication protocols and that are emitted by the first laser emitter 21, the second laser emitter 22, and the third laser emitter 23 may be combined by using the fourth filter group 41d, and transmitted to the optical connector 1.

If the optical signal of the first communication protocol is an optical signal of a 10G PON protocol, the optical signal of the second communication protocol is an optical signal of a 50G PON protocol, and the optical signal of the third communication protocol is an optical signal of a GPON protocol, the first communication protocol includes a modulation optical signal whose receiving rate is 10 Gbps and whose wavelength ranges from 1260 nm to 1280 nm, and a received modulation electrical signal whose rate is 10 Gbps is converted, for emission, into a modulation optical signal whose wavelength ranges from 1575 nm to 1580 nm. The second communication protocol includes a modulation optical signal whose receiving rate is 50 Gbps and whose wavelength ranges from 1284 nm to 1288 nm, and a received modulation electrical signal whose rate is 50 Gbps is converted, for emission, into a modulation optical signal whose wavelength ranges from 1340 nm to 1344 nm. The third communication protocol includes a modulation optical signal whose receiving rate is 1.25 Gbps and whose wavelength ranges from 1290 nm to 1330 nm, and a received modulation electrical signal whose rate is 2.5 Gbps is converted, for emission, into a modulation optical signal whose wavelength ranges from 1480 nm to 1490 nm.

Therefore, in some embodiments, the first filter group 41a may separate a combined optical signal that is led into from the optical connector 1 and that includes the modulation optical signal whose rate is 1.25 Gbps and whose wavelength ranges from 1290 nm to 1330 nm, the modulation optical signal whose rate is 10 Gbps and whose wavelength ranges from 1260 nm to 1280 nm, and the modulation optical signal whose rate is 50 Gbps and whose wavelength ranges from 1284 nm to 1288 nm, and lead, into the first optical receiver 31, the modulation optical signal whose rate is 10 Gbps and whose wavelength ranges from 1260 nm to 1280 nm, and lead out the modulation optical signal whose rate is 1.25 Gbps and whose wavelength ranges from 1290 nm to 1330 nm and the modulation optical signal whose rate is 50 Gbps and whose wavelength ranges from 1284 nm to 1288 nm. The second filter group 41b may lead, into the second optical receiver 32, the modulation optical signal whose rate is 50 Gbps, whose wavelength ranges from 1284 nm to 1288 nm, and that is emergent from the first filter group 41a, and lead out the modulation optical signal whose rate is 1.25 Gbps and whose wavelength ranges from 1290 nm to 1330 nm. The third filter group 41c may lead, into the third optical receiver 33, the modulation optical signal whose rate is 1.25 Gbps, whose wavelength ranges from 1290 nm to 1330 nm, and that is emergent from the second filter group 41b.

The first laser emitter 21 is configured to convert, into a modulation optical signal whose emission wavelength ranges from 1575 nm to 1580 nm, a received modulation electrical signal whose rate is 10 Gbps. The second laser emitter 22 is configured to convert, into a modulation optical signal whose emission wavelength ranges from 1340 nm to 1344 nm, a received modulation electrical signal whose rate is 50 Gbps. The third laser emitter 23 is configured to convert, into a modulation optical signal whose emission wavelength ranges from 1480 nm to 1490 nm, a received modulation electrical signal whose rate is 2.5 Gbps. The fourth filter group 41d may combine the modulation optical signal whose wavelength ranges from 1575 nm to 1580 nm and that is emitted by the first laser emitter 21, the modulation optical signal whose wavelength ranges from 1340 nm to 1344 nm and that is emitted by the second laser emitter 22, and the modulation optical signal whose wavelength ranges from 1480 nm to 1490 nm and that is emitted by the third laser emitter 23, and lead a combined modulation optical signal into the optical connector 1. Therefore, the first laser emitter 21 and the first optical receiver 31 form a transceiver assembly for a 10G PON, the second laser emitter 22 and the second optical receiver 32 form a transceiver assembly for a 50G PON, and the third laser emitter 22 and the second optical receiver 32 form a transceiver assembly for a GPON. The optical device 200 in this embodiment of this application includes three transceiver assemblies, and may meet the requirement for simultaneously receiving/emitting a GPON optical signal, a 10G PON optical signal, and a 50G PON optical signal.

It may be understood that, that the first laser emitter 21, the second laser emitter 22, and the third laser emitter 23 correspondingly emit the optical signals of the three different communication protocols, and the first optical receiver 31, the second optical receiver 32, and the third optical receiver 33 correspondingly receive the optical signals of the three different communication protocols is merely an example. In some other embodiments, the first laser emitter 21, the second laser emitter 22, and the third laser emitter 23 may further emit an optical signal of another communication protocol, and the first optical receiver 31, the second optical receiver 32, and the third optical receiver 33 may further receive an optical signal of another communication protocol. This is not limited in this application. It only needs to ensure that the optical device 200 in this embodiment of this application includes three transceiver assemblies, and the three transceiver assemblies may receive/emit optical signals of the three different communication protocols respectively.

In addition, there are a plurality of structures and distribution solutions of the light emission apparatus 2 and the optical receiving apparatus 3 in the optical device 200. For example, as shown in FIG. 5, the first laser emitter 21, the second laser emitter 22, and the third laser emitter 23 in the light emission apparatus 2 may be independently packaged and distributed on the housing 10 at intervals. For another example, any two of the first laser emitter 21, the second laser emitter 22, and the third laser emitter 23 are integrally packaged into an integral structure, and the remaining one of the first laser emitter 21, the second laser emitter 22, and the third laser emitter 23 is independently packaged, to improve a degree of integration of the light emission apparatus 2, reduce a volume of the light emission apparatus 2, and facilitate miniaturization of the optical device 200. In addition, the independently packaged laser emitter and the other two laser emitters that are integrally packaged are distributed on the housing 10 at intervals, to facilitate mounting of the plurality of filters 41 and implement separation of optical paths. For another example, the first laser emitter 21, the second laser emitter 22, and the third laser emitter 23 are integrated into an integral structure, to further improve a degree of integration of the light emission apparatus 2, reduce a volume of the light emission apparatus 2, and facilitate miniaturization of the optical device 200.

Similarly, structures of the first optical receiver 31, the second optical receiver 32, and the third optical receiver 33 in the optical receiving apparatus 3 may be similar to structures of the first laser emitter 21, the second laser emitter 22, and the third laser emitter 23 in the light emission apparatus 2 in the foregoing embodiment.

For example, as shown in FIG. 5, the first optical receiver 31, the second optical receiver 32, and the third optical receiver 33 in the optical receiving apparatus 3 may be independently packaged and distributed on the housing 10 at intervals. For another example, any two of the first optical receiver 31, the second optical receiver 32, and the third optical receiver 33 are integrally packaged into an integral structure, and the remaining one of the first optical receiver 31, the second optical receiver 32, and the third optical receiver 33 is independently packaged, to improve a degree of integration of the optical receiving apparatus 3, reduce a volume of the optical receiving apparatus 3, and facilitate miniaturization of the optical device 200. In addition, the independently packaged optical receiver and the other two optical receivers that are integrally packaged are disposed on the housing 10 at intervals, to facilitate mounting of the plurality of filters 41 and implement separation of optical paths. For another example, the first optical receiver 31, the second optical receiver 32, and the third optical receiver 33 are integrally packaged into an integral structure, to further improve a degree of integration of the light emission apparatus 2, reduce a volume of the light emission apparatus 2, and facilitate miniaturization of the optical device 200.

In addition, regardless of an embodiment of whether the first laser emitter 21, the second laser emitter 22, and the third laser emitter 23 in the light emission apparatus 2 are separately and independently packaged, or two or three are integrally packaged into an integral structure, an independent packaging form or an integral packaging form of the first laser emitter 21, the second laser emitter 22, and the third laser emitter 23 may be a coaxial (transistor outline, TO) packaging form or a box (BOX) packaging form. This is not limited in this application. Similarly, regardless of an embodiment of whether the first optical receiver 31, the second optical receiver 32, and the third optical receiver 33 in the optical receiving apparatus 3 are separately and independently packaged, or two or three are integrally packaged together, an independent packaging form or an integral packaging form of the first optical receiver 31, the second optical receiver 32, and the third optical receiver 33 may be a coaxial packaging form or a box packaging form. This is not limited in this application.

It should be noted that, when the two or three laser emitters in the light emission apparatus 2 are integrated into an integral structure, some filters 410, for example, all or some filters 410 in the fourth filter group 41d may be integrated with two or three laser emitters in a same housing. Similarly, when two or three optical receivers in the optical receiving apparatus 3 are integrated into an integral structure, some filters 410, for example, all or some filters 410 in the first filter group 41a, the second filter group 41b, or the third filter group 41c may be integrated with two or three optical receivers in a same housing.

It should be noted that, in addition to the plurality of filters 41, the optical film assembly 4 of the optical device 200 in this application may further include devices such as an isolator 42 and a collimating lens 43 that are shown in FIG. 5. This is not limited in this application. The isolator 42 is configured to reduce crosstalk of an optical signal for the light emission apparatus 2. The collimating lens 43 is configured to convert converged light into parallel light or convert parallel light into converged light.

The plurality of filters 41 need to be disposed at different locations in the housing 10, to implement different packaging structures and distribution manners of the light emission apparatus 2 and the optical receiving apparatus 3 in the optical device 200. When the plurality of filters 41 and the housing 10 are assembled, if a plurality of fastening frames 101 shown in FIG. 7 are fastened on an inner wall of the housing 10, the fastening frame 101 and the housing 10 may be integrally disposed. The fastening frame 101 has a groove that matches the filter 410 in terms of a size and a shape. A periphery of the entire filter 410 is connected to the groove of the fastening frame 101. Locations of the plurality of filters 41 in the housing 10 are fastened and cannot be adjusted. Because an error easily occurs in a manufacturing process or an assembling process of the plurality of fastening frames 101 and the housing 10, a preset mounting location and a preset mounting angle of the filter 410 in the housing 10 are deviated. Consequently, a demultiplexing curve of one or more filters changes, and optical signal demultiplexing is inaccurate. Especially, for filters 410 with a small spacing, the filter 410 with a mounting error leads to poor optical splitting accuracy of an optical path, and accuracy of simultaneously receiving/emitting a GPON optical signal, a 10G PON optical signal, and a 50G PON optical signal by the optical device 200 is seriously affected.

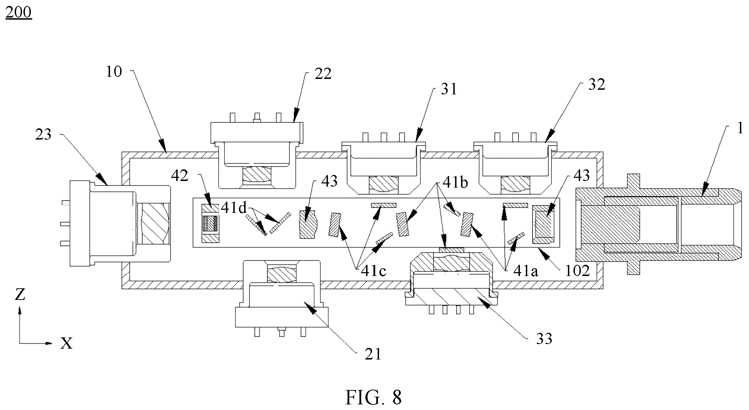

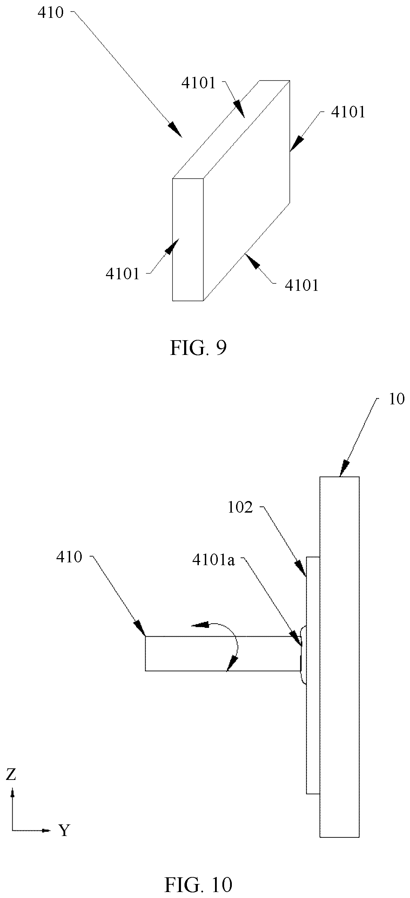

Therefore, to resolve this problem, in some embodiments of this application, a mounting surface 102 is formed in the housing 10. The mounting surface 102 shown in FIG. 8 is parallel to an XZ plane. A side face of the filter 410 may be connected to the mounting surface 102 in an adhesive manner. The filter 410 shown in FIG. 9 is a cuboid, and the filter 410 has four side faces 4101. One side face 4101a of the filter 410 is connected to the mounting surface 102 in an adhesive manner, as shown in FIG. 10. A shape of the filter 410 may also be another shape. This is not limited in this application.

When the filter 410 is mounted, glue dispensing (which may be specifically epoxy glue dropping) may be first performed at a preset mounting location corresponding to the filter 410 on the mounting surface 102 of the housing 10. Then, in a mounting process, a mounting location and a mounting angle of the filter 410 are slightly adjusted (as shown in FIG. 10, the filter 410 is rotated) by using a sideline or a corner of the filter 410 as a mounting reference, until the filter 410 reaches the preset mounting location and the preset mounting angle. Alternatively, whether the filter 410 reaches the preset mounting location and the preset mounting angle may be determined in an active mounting manner (that is, detection light is input through the optical connector 1, and a detection apparatus detects whether detection light passing through the filter 410 meets a target light emergent angle). Then, an adhesive layer is cured, so that the filter 410 is fastened on the housing 10. Therefore, the plurality of filters 41 may be precisely mounted in the housing 10. In this way, an assembling error is reduced, and demultiplexing accuracy of the plurality of filters 41 is ensured.

It should be noted that, based on the mounting location of the filter 410, there may be one, two, or more mounting surfaces 102 in the housing 10, so that the plurality of filters 41 disposed at intervals are fastened on the housing 10 in the side mounting manner, to ensure that mounting precision of the plurality of filters 41 is high.

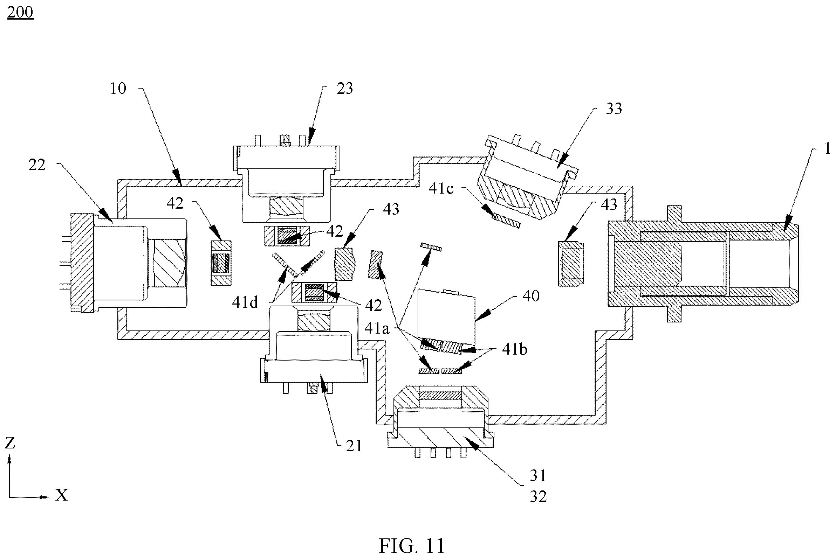

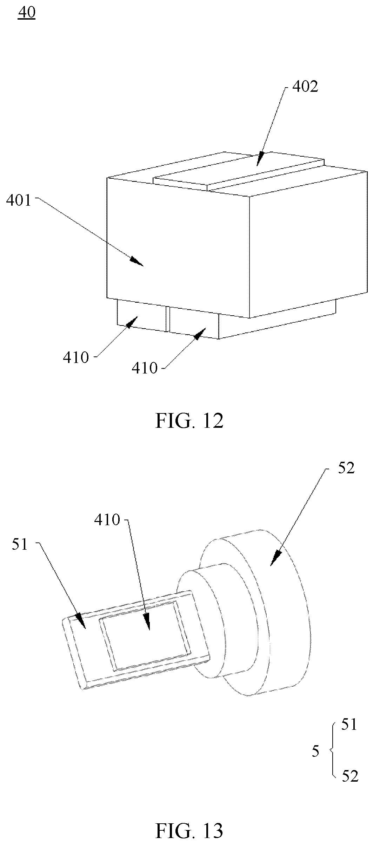

In addition, in some embodiments, as shown in FIG. 11, the optical device 200 further includes a Z-block filter assembly 40. As shown in FIG. 12, the Z-block filter assembly 40 includes one or more filters in the plurality of filters 41 and an adjustment support kit 401. For example, the Z-block filter assembly 40 includes two filters 410 in the plurality of filters 41, and the two filters 410 are both disposed on the adjustment support kit 401. The two filters 410 may be fastened on the adjustment support kit 401 in a bonding manner. The adjustment support kit 401 may also be fastened on the housing 10 in a bonding manner. For example, the adjustment support kit 401 may be an adjustment support, or may be an adjustment prism. This is not limited in this application.

In addition, because a volume of the adjustment support kit 401 is limited, and a spacing between two filters 410 is small, this is applicable to a scenario in which two or more laser emitters in a laser emission apparatus 2 are integrated together, or two or more optical receivers in the optical receiving apparatus 3 are integrated together. The first optical receiver 31 and the second optical receiver 32 in the optical receiving apparatus 3 shown in FIG. 11 are integrated into an integral structure.

In addition, an example in which the adjustment support kit 401 is an adjustment prism, a bonding and assembling process of the adjustment prism and the housing 10 is the same as a bonding and assembling process in which the side face of the filter 410 is mounted on the mounting surface 102 of the housing 10 in the foregoing embodiment. That is, the adjustment prism is pre-mounted in the housing 10 by using an adhesive material (for example, epoxy glue), and then the adjustment prism is slightly adjusted by using a sideline or a corner of the adjustment prism as a mounting reference, to change the mounting location and the mounting angle of the filter 410, until the filter 410 reaches the preset mounting location and the preset mounting angle. Alternatively, whether the filter 410 reaches the preset mounting location and the preset mounting angle may be determined in an active mounting manner (that is, detection light is input through the optical connector 1, and a detection apparatus detects whether detection light passing through the filter 410 meets a target light emergent angle). Then, an adhesive layer is cured, so that the filter 410 is fastened on the housing 10. Therefore, the filter 410 in the Z-block filter assembly 40 may also be accurately mounted, to reduce an assembling error and ensure demultiplexing accuracy of the filter 410.

It should be noted that, in addition to the one or more filters and the adjustment support kit 401, the Z-block filter assembly 40 may further be provided with another optical film, for example, a reflective film or a reflector, based on a requirement of an optical path. The reflective film may be directly mounted on the adjustment prism, and the reflector may be directly mounted on the adjustment support. The adjustment support kit 401 shown in FIG. 12 is an adjustment prism, and a reflective film 402 is mounted on the adjustment prism 401. In addition, in this embodiment of this application, a quantity of Z-block filter assemblies 40 in the optical device 200 is not limited, and there may be one, two, or more Z-block filter assemblies 40.

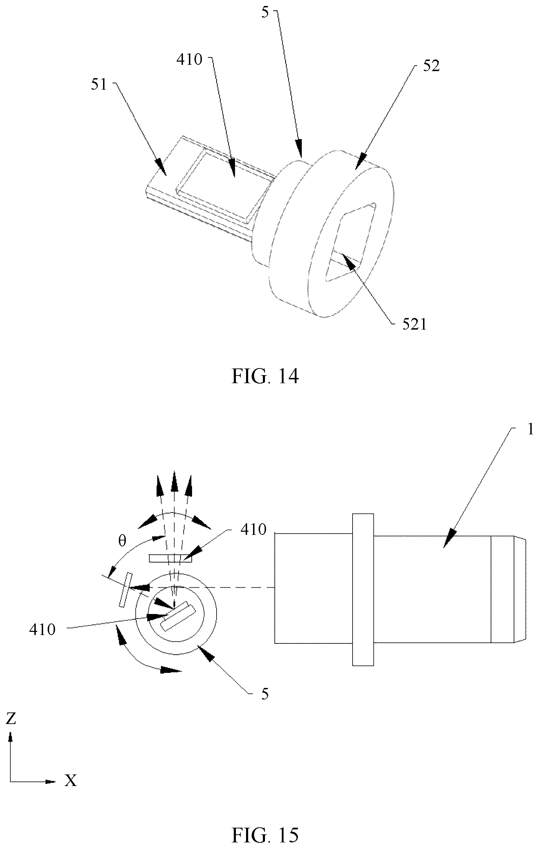

In addition to the foregoing two manners, it can be ensured that the filter 410 can be accurately mounted on the housing 10. In some embodiments of this application, the optical device 200 further includes an adjustment frame 5 shown in FIG. 13. The filter 410 may be mounted on the adjustment frame 5. For example, the filter 410 is fastened to the adjustment frame 5 in a bonding manner. The adjustment frame 5 is connected to the inner wall of the housing 10. When the filter 410, the adjustment frame 5, and the housing 10 are assembled, the filter 410 may be first fastened on the adjustment frame 5. Then, the adjustment frame 5 is movably (for example, rotatably) connected to the housing 10. For example, as shown in FIG. 13, the adjustment frame 5 includes a mounting bracket 51 and an adjustment base 52, and the filter 410 is mounted on the mounting bracket 51. The adjustment base 52 may be cylindrical, the housing 10 is provided with a fitting hole, and the adjustment base 52 may be rotatably mounted in the mounting hole. The mounting bracket 51 is fastened on one end face of the adjustment base 52, and an adjustment slot 521 shown in FIG. 14 is formed on the other end face of the adjustment base 52. An adjustment tool may be a wrench that matches the adjustment slot 521. The wrench is inserted into the adjustment slot 521 to apply a rotational force, so that the adjustment base 52 rotates in the fitting hole, to adjust the mounting angle of the filter 410. As shown in FIG. 15, detection light is input to the optical connector 1, and the detection apparatus may detect whether the detection light passing through the filter 410 reaches a preset light emergent angle θ. In this way, whether the filter 410 reaches the preset mounting angle is determined, to ensure mounting precision of the filter 410 and ensure demultiplexing accuracy. Finally, the filter 410 is fastened on the adjustment frame 5 in a bonding manner.

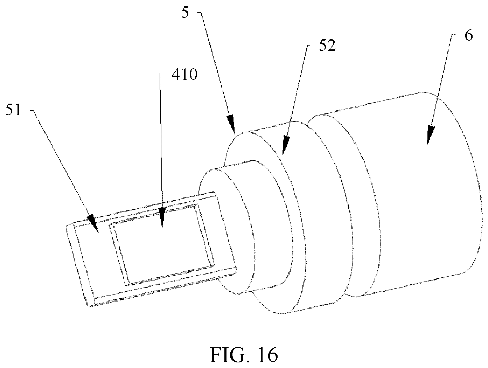

However, the adjustment frame 5 needs to be adjusted manually in an assembling process, which is complex in operation. Therefore, in some embodiments of this application, the optical device 200 further includes a driving piece 6 shown in FIG. 16, and the driving piece 6 is connected to the adjustment frame 5 in a driving manner. During assembly of the optical device 200, the driving piece 6 may drive the adjustment frame 5 to rotate, to implement a function of automatically adjusting the mounting angle of the filter 410. Specifically, the driving piece 6 may be a driving motor.

It may be understood that, the optical device 200 may include a plurality of adjustment frames 5, and the plurality of filters 41 are respectively mounted on the plurality of adjustment frames 5. For example, a quantity of adjustment frames 5 and a quantity of filters 410 in the optical device 200 are the same. The plurality of filters 41 are mounted on the plurality of adjustment frames 5 in one-to-one correspondence.

For some optical devices 200 with small space in the housing 10, adjustment frames 5 whose quantity is the same as a quantity of the plurality of filters 41 cannot be mounted in the housing 10. Therefore, in some embodiments, the quantity of adjustment frames 5 in the optical device 200 is less than the quantity of filters 410. In other words, only some filters 410 in the plurality of filters 41 may be correspondingly mounted on the adjustment frame 5. For example, some filters 410 in the plurality of filters 41 have a function of reflecting an optical signal to another filter 410, and a filter 410 that receives a reflected optical signal may be selected to be mounted on the adjustment frame 5. Therefore, even if the filter 410 that reflects the optical signal has a mounting error, a filter 410 that receives an optical signal having a light emergent angle error does not further increase the error, to reduce impact of the mounting error on demultiplexing accuracy.

The following describes structures and distribution manners of the light emission apparatus 2, the optical receiving apparatus 3, and the optical film assembly 4 in the optical device 200 with reference to several specific examples.

### Example 1

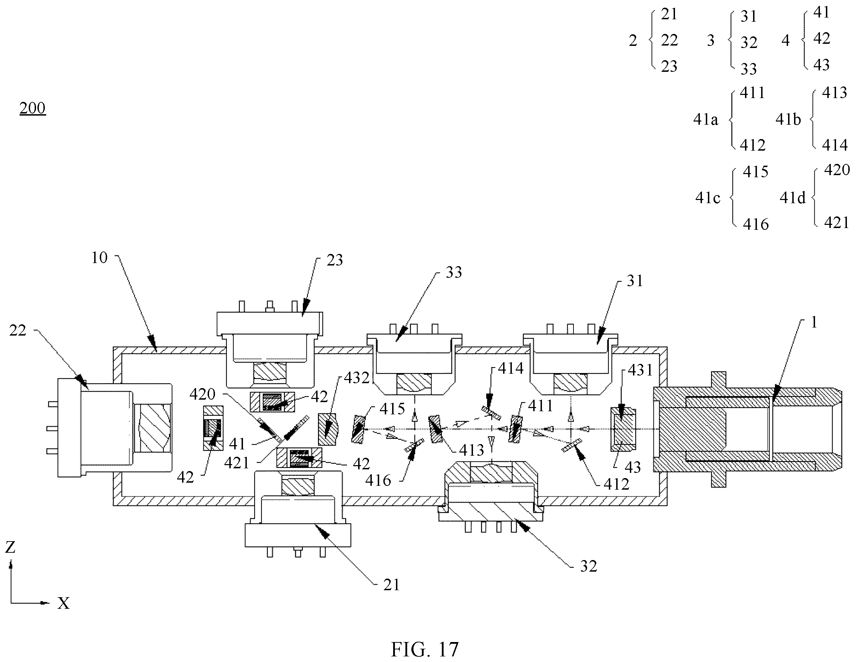

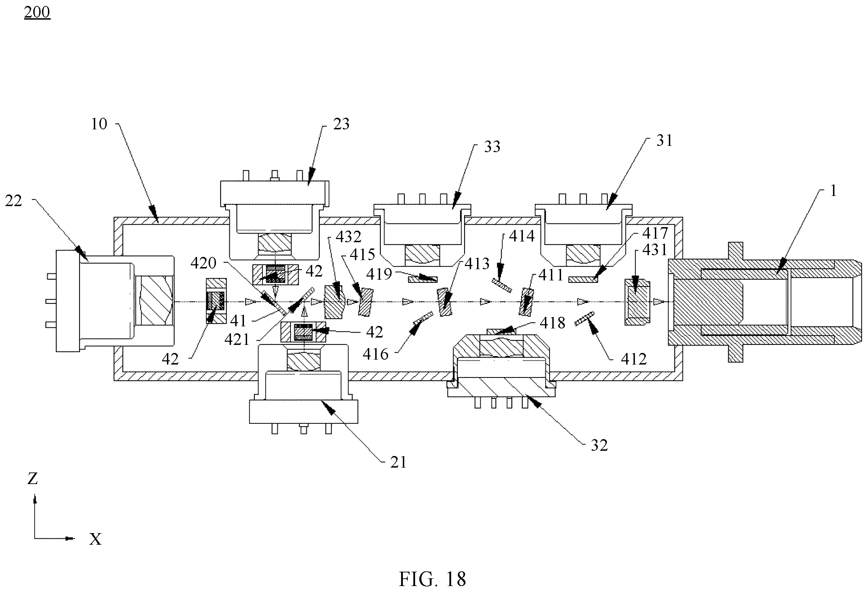

As shown in FIG. 17 and FIG. 18, an optical device 200 in this example includes a housing 10, and the housing 10 is provided with an optical connector 1, a light emission apparatus 2, and an optical receiving apparatus 3. The light emission apparatus 2 includes a first laser emitter 21, a second laser emitter 22, and a third laser emitter 23 that are independently packaged. The optical receiving apparatus 3 includes a first optical receiver 31, a second optical receiver 32, and a third optical receiver 33 that are independently packaged. The first laser emitter 21, the second laser emitter 22, the third laser emitter 23, the first optical receiver 31, the second optical receiver 32, and the third optical receiver 33 shown in FIG. 17 are all packaged through coaxial packaging. The first laser emitter 21, the second laser emitter 22, the third laser emitter 23, the first optical receiver 31, the second optical receiver 32, and the third optical receiver 33 are disposed on the housing 10 at intervals. In addition, compared with the light emission apparatus 2, the first optical receiver 31, the second optical receiver 32, and the third optical receiver 33 in the optical receiving apparatus 3 are located on a part that is of the housing 10 and that is close to the optical connector 1. The first laser emitter 21, the second laser emitter 22, and the third laser emitter 23 are respectively configured to emit an optical signal of a first communication protocol, an optical signal of a second communication protocol, and an optical signal of a third communication protocol. The first optical receiver 31, the second optical receiver 32, and the third optical receiver 33 are respectively configured to receive an optical signal of a first communication protocol, an optical signal of a second communication protocol, and an optical signal of a third communication protocol.

For example, one of the first laser emitter 21, the second laser emitter 22, and the third laser emitter 23 is disposed opposite to the optical connector 1. For example, the second laser emitter 22 shown in FIG. 17 is disposed opposite to the optical connector 1. The first laser emitter 21, the third laser emitter 23, the first optical receiver 31, the second optical receiver 32, and the third optical receiver 33 are located between the first laser emitter 21 and the optical connector 1. In addition, the third laser emitter 23, the first laser emitter 21, the third optical receiver 33, the second optical receiver 32, and the first optical receiver 31 are sequentially disposed in a direction of distances to the optical connector 1 that are in descending order.

An optical film assembly 4 is mounted in the housing 10, the optical film assembly 4 includes a plurality of filters 41, and the plurality of filters 41 include a first filter group 41a, a second filter group 41b, a third filter group 41c, and a fourth filter group 41d.

The first filter group 41a includes a first filter 411 and a second filter 412. The first filter 411 and the second filter 412 are both located on an optical path on which the first optical receiver 31 receives the optical signal of the first communication protocol, and are sequentially disposed in a light incident direction of the first optical receiver 31. The first filter 411 is disposed opposite to the optical connector 1. The first filter 411 may separate the optical signal of the first communication protocol from the optical signal of the second communication protocol and the optical signal of the third communication protocol in the first combined optical signal (including the optical signal of the first communication protocol, the optical signal of the second communication protocol, and the optical signal of the third communication protocol) sent through the optical connector 1. The first filter 411 may reflect, to the second filter 412, the optical signal of the first communication protocol in the first combined optical signal sent through the optical connector 1, and allow the optical signal of the second communication protocol and the optical signal of the third communication protocol in the first combined optical signal to be transmitted. The second filter 412 may reflect, to the first optical receiver 31, the optical signal that is of the second communication protocol and that is reflected by the first filter 411.

The second filter group 41b includes a third filter 413 and a fourth filter 414. The third filter 413 and the fourth filter 414 are both located on an optical path on which the second optical receiver 32 receives the optical signal of the second communication protocol, and are sequentially disposed in a light incident direction of the second optical receiver 32. The third filter 413 is located on a transmission optical path of the first filter 411. The third filter 413 is configured to separate the optical signal of the second communication protocol from the optical signal of the third communication protocol in a second combined optical signal (including the optical signal of the second communication protocol and the optical signal of the third communication protocol) transmitted by the first filter 411. The third filter 413 allows the optical signal of the third communication protocol in the second combined signal to be transmitted, and reflects the optical signal of the second communication protocol to the fourth filter 414. The fourth filter 414 may reflect, to the second optical receiver 32, the optical signal that is of the second communication protocol and that is reflected by the third filter 413.

The third filter group 41b includes a fifth filter 415 and a sixth filter 416. The fifth filter 415 and the sixth filter 416 are both located on an optical path on which the third optical receiver 33 receives the optical signal of the third communication protocol, and are sequentially disposed in a light incident direction of the third optical receiver 33. The fifth filter 415 is located on a transmission optical path of the third filter 413. The fifth filter 415 is configured to reflect, to the sixth filter 416, the optical signal that is of the third communication protocol and that is transmitted by the third filter 413. The sixth filter 416 may reflect, to the third optical receiver 33, the optical signal that is of the third communication protocol and that is reflected by the fifth filter 415.

In the plurality of filters 41, only the first filter 411 is located at a location at which light incident paths of three optical receivers overlap, and the third filter 413 is located at a location at which light incident paths of two optical receivers overlap. Therefore, the first optical receiver 31, the second optical receiver 32, and the third optical receiver 33 impose small impact on each other. For example, the second filter 412 does not affect mounting of the third filter 413 and the fourth filter 414. A distribution manner of the plurality of filters 41 is applicable to an optical device 200 in which the first optical receiver 31, the second optical receiver 32, and the third optical receiver 33 are independently packaged and have a large spacing.

It may be understood that, when distribution locations of the first laser emitter 21, the second laser emitter 22, the third laser emitter 23, the first optical receiver 31, the third optical receiver 33, and the second optical receiver 32 on the housing 10 are exchanged, a correspondence between the plurality of filters 41 and optical paths of the first optical receiver 31, the second optical receiver 32, and the third optical receiver 33 also changes correspondingly. Details are not described herein again.

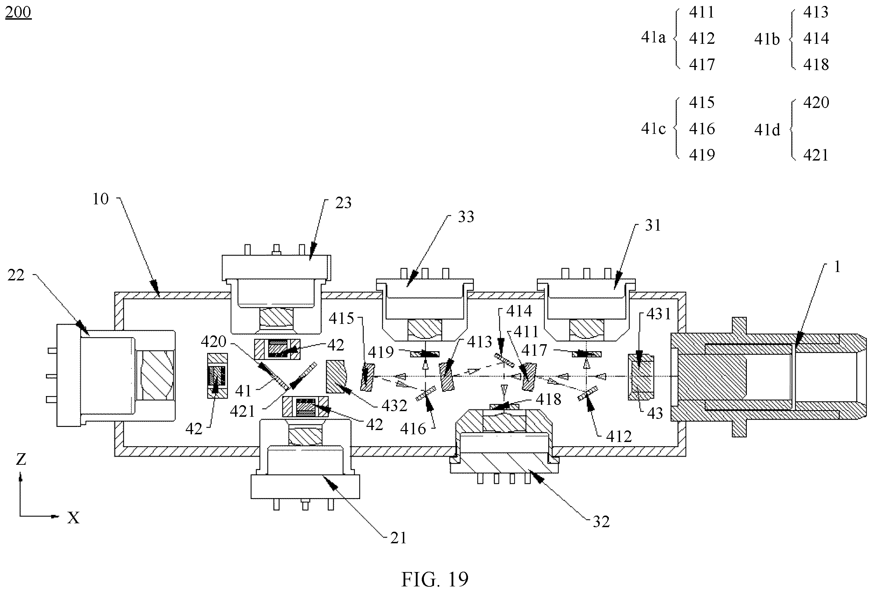

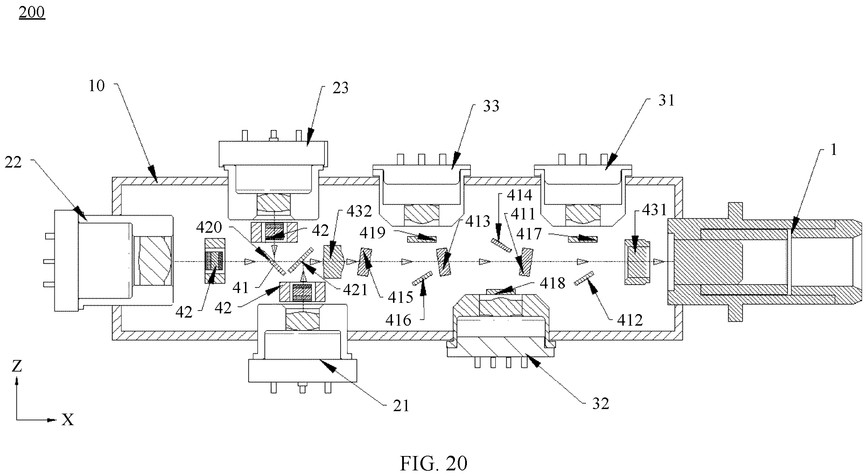

Based on disposing of the filter 410, in some embodiments, as shown in FIG. 19 and FIG. 20, the first filter group 41a further includes a seventh filter 417, and the seventh filter 417 is located on a reflection optical path of the second filter 412 and is disposed opposite to the first optical receiver 31, to prevent an impurity optical signal from entering the first optical receiver 31, the second optical receiver 32, and the third optical receiver 33. The seventh filter 417 may filter out the impurity optical signal in the optical signal that is of the first communication protocol and that is reflected by the second filter 412, and allow the filtered optical signal of the first communication protocol to be transmitted to the first optical receiver 31.

Similarly, the second filter group 41b further includes an eighth filter 418, and the eighth filter 418 is located on a reflection optical path of the fourth filter 414 and is disposed opposite to the second optical receiver 32. The eighth filter 418 may filter out the impurity optical signal in the optical signal that is of the second communication protocol and that is reflected by the fourth filter 414, and allow the filtered optical signal of the second communication protocol to be transmitted to the second optical receiver 32.

Similarly, the third filter group 41c further includes a ninth filter 419, and the ninth filter 419 is located on a reflection optical path of the sixth filter 416 and is disposed opposite to the third optical receiver 33. The ninth filter 419 may filter out an impurity optical signal in the optical signal that is of the third communication protocol and that is reflected by the sixth filter 416, and allow the filtered optical signal of the third communication protocol to be transmitted to the third optical receiver 33. Therefore, the impurity optical signal can be prevented from entering the first optical receiver 31, the second optical receiver 32, and the third optical receiver 33.

An optical path from the second laser emitter 22 to the optical connector 10 intersects with an optical path from the third laser emitter 23 to the optical connector 10. The fourth filter group 41b includes a tenth filter 420 and an eleventh filter 421, and the tenth filter 420 is located on the optical path from the second laser emitter 22 to the optical connector 10 and the optical path from the third laser emitter 23 to the optical connector 10. An optical path from the first laser emitter 21 to the optical connector 10 intersects with an emergent optical path of the tenth filter 420. The eleventh filter 421 is located at an intersection of the optical path from the first laser emitter 21 to the optical connector 10 and the emergent optical path of the tenth filter 420. The tenth filter 420 combines, into a third combined optical signal, the optical signal that is of the second communication protocol and that is emitted by the second laser emitter 22 and the optical signal that is of the third communication protocol and that is emitted by the third laser emitter 23, and allows the third combined optical signal to be transmitted to the eleventh filter 421. The eleventh filter 421 combines, into a fourth combined optical signal, the third combined optical signal and the optical signal that is of the first communication protocol and that is emitted by the first laser emitter 2, and transmits the fourth combined optical signal to the optical connector 1.

The first filter 411, the third filter 413, and the fifth filter 415 that are shown in FIG. 20 are all located on light emergent paths of the first laser emitter 21, the second laser emitter 22, and the third laser emitter 23. In addition, the fifth filter 415, the third filter 413, and the first filter 411 are sequentially located on a light emergent path of the light emission apparatus 2. The fifth filter 415, the third filter 413, and the first filter 411 are further configured to allow, to be combined and transmitted to the optical connector 1, the optical signal that is of the first communication protocol and that is emitted by the first laser emitter 21, the optical signal that is of the second communication protocol and that is emitted by the second laser emitter 22, and the optical signal that is of the third communication protocol and that is emitted by the third laser emitter 23. Therefore, the fourth combined optical signal led out from the eleventh filter 421 may be transmitted to the optical connector 1 sequentially through the fifth filter 415, the third filter 413, and the first filter 411.

For an optical device 200 with large space in the housing 10, the optical device 200 may include eleven adjustment frames 5, and the eleven filters 410 may be respectively disposed on the eleven adjustment frames 5 in one-to-one correspondence. The eleven adjustment frames 5 are connected to an inner wall of the housing 10. When the adjustment frame 5 and the housing 10 are assembled, a mounting location and a mounting angle of the filter 410 are adjusted by adjusting a mounting location and a mounting angle of the adjustment frame 5. Therefore, it is ensured that the eleven filters 41 can be accurately mounted, an assembling error is reduced, and demultiplexing accuracy is ensured.

In addition, in some embodiments, the optical device 200 in this example further includes a plurality of driving pieces 6, and the plurality of adjustment frames 5 may be further connected to one or more driving pieces 6 in a driving manner. The driving piece 6 is specifically a driving motor. In this way, the mounting angle of the filter 410 is automatically adjusted.

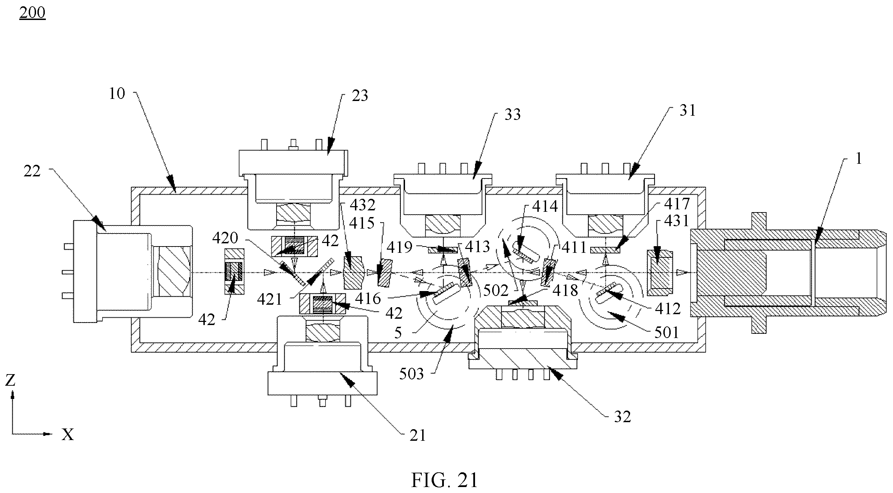

However, space in the housing 10 of the optical device 200 shown in FIG. 20 is small. Therefore, only a small quantity of adjustment frames 5 may be disposed in the housing 10. As shown in FIG. 21, the optical device 200 may include three adjustment frames 5, and the three adjustment frames 5 are a first adjustment frame 501, a second adjustment frame 502, and a third adjustment frame 503. The second filter 412 is mounted on the first adjustment frame 501, the fourth filter 414 is mounted on the second adjustment frame 502, and the sixth filter 416 is mounted on the third adjustment frame 503. Therefore, even if the first filter 411, the third filter 413, and the fifth filter 415 have mounting errors, because the second filter 412, the fourth filter 414, and the sixth filter 416 are mounted precisely, the second filter 412 does not increase a mounting error of the first filter 411 during reflection, the fourth filter 414 does not increase a mounting error of the third filter 413 during reflection, and the sixth filter 416 does not increase a mounting error of the fifth filter 415 during reflection. Therefore, a mounting error of the plurality of filters 41 may be reduced to a value less than ±0.3°, to ensure demultiplexing accuracy of the plurality of filters 41 in the optical device 200.

In addition, in some embodiments, the first adjustment frame 501, the second adjustment frame 502, and the third adjustment frame 503 may be all connected to the driving piece 6 in a driving manner. The first adjustment frame 501, the second adjustment frame 502, and the third adjustment frame 503 may be connected to a same driving piece 6 in a driving manner. Alternatively, the first adjustment frame 501, the second adjustment frame 502, and the third adjustment frame 503 may be respectively connected to three driving pieces 6 in a one-to-one driving manner. This is not limited in this application.

Based on the foregoing descriptions, the optical device 200 of the foregoing structure may be assembled in the following assembling method:

S101: Movably mount the plurality of filters 41 at preset reference locations in the housing 10.

For example, if the quantity of filters 410 and the quantity of adjustment frames 5 in the optical device 200 are equal, for example, the optical device 200 includes eleven filters and eleven adjustment frames 5, S101 specifically includes:
disposing the plurality of filters 41 on the plurality of adjustment frames 5 respectively; and connecting the housing 10 and assemblies of the plurality of filters 41 to the adjustment frames 5 movably respectively.

If the quantity of filters 410 in the optical device 200 is greater than the quantity of adjustment frames 5, S101 specifically includes:
fixedly mounting at least one filter 410 in the plurality of filters 41 on the adjustment frame 5, and movably mounting, in the housing 10, an assembly of the filter 410 and the adjustment frame 5 and a remaining filter 410 in the plurality of filters 41.

It should be noted that, that the adjustment frame 5 and the housing 10 are movably connected may be specifically that the adjustment frame 5 and the housing 10 are connected mechanically and rotatably, or may be directly connected by using an adhesive material that requires a dedicated curing operation.

S102: Input detection light into the optical connector 1; sequentially adjust mounting angles of the filters 410 by using the adjustment frame 5 in an optical path sequence, until an angle at which a beam of the detection light led out from or led into the filter 410 reaches a preset angle; and fastening the adjustment frame 5 to the housing 10.

For example, the optical device 200 shown in FIG. 21 is used as an example. A mounting angle of the second filter 412 may be adjusted by using the first adjustment frame 501, a mounting angle of the fifth filter 415 may be adjusted by using the second adjustment frame 502, and a mounting angle of the eighth filter 418 may be adjusted by using the third adjustment frame 503. The first adjustment frame 501, the second adjustment frame 502, and the third adjustment frame 503 may be adjusted manually, or may be adjusted automatically.

If the adjustment frame 5 is mechanically and rotatably connected to the housing 10, a manner in which the adjustment frame 5 is fastened to the housing 10 may be specifically: directly fastening the adjustment frame 5 to the housing 10 in a welding or adhesive manner.

If the adjustment frame 5 is connected to the housing 10 by using the adhesive material that requires the dedicated curing operation, a manner in which the adjustment frame 5 is fastened to the housing 10 may be specifically: curing an adhesive material between the adjustment frame 5 and the housing 10. For example, a pre-curing operation is performed on the adhesive material between the adjustment frame 5 and the housing 10. Specifically, the adhesive material between the adjustment frame 5 and the housing 10 may be cured by using UV light. Then, a further curing operation is performed on the adhesive material between the adjustment frame 5 and the housing 10. Specifically, a light curing or thermal curing process may be used.

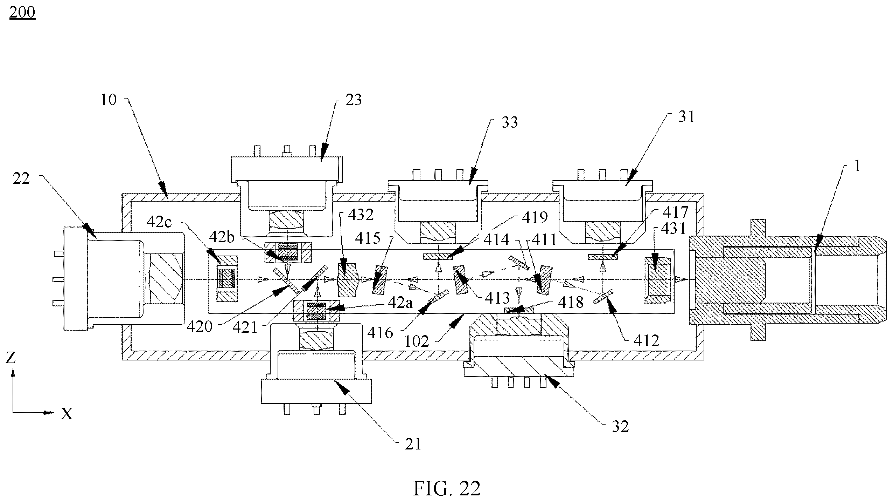

In addition, in this example, a mounting surface 102 shown in FIG. 22 may be formed on the inner wall of the housing 10. The plurality of filters 41 may be all bonded to the mounting surface 102, or only one or more filters 410 may be bonded to the mounting surface 102. Therefore, the mounting error of the plurality of filters 41 may be reduced to a value less than ±0.3°, to ensure demultiplexing accuracy of the filter 410 in the optical device 200. One mounting surface 102 is formed in the housing 10 shown in FIG. 22, and the mounting surface 102 is parallel to an XZ plane. The plurality of filters 41 are all mounted on the mounting surface 102.

Correspondingly, the plurality of filters 41 in the optical device 200 may be assembled in the following assembling method:
S201: Perform glue dispensing on the mounting surface 102 in the housing 10 based on a preset reference direction of the filter 410 in the housing 10.

For example, mounting locations and mounting angles of the plurality of filters 41 on the mounting surface 102 of the housing 10 are designed based on distribution locations of the light emission apparatus 2 and the optical receiving apparatus 3 on the housing 10, to satisfy a demultiplexing feature of the plurality of filters 41. The mounting location is a preset mounting location, and the mounting angle is a preset mounting angle. Glue dispensing is performed at the preset mounting locations of the plurality of filters 41 on the mounting surface 102 of the housing 10.

S202: Attach a side face 4101 of the filter 410 to an adhesive layer on the mounting surface 102, and adjust the mounting angle of the filter 410 by using a sideline or a corner of the filter 410 as a mounting reference, until the mounting angle reaches the preset mounting angle.

For example, one side face 4101 of any filter 410 is attached to the adhesive layer of the mounting surface 102. The mounting angle of the filter 410 is adjusted by using a sideline or a corner of the filter 410 as a mounting reference, until the mounting angle of the filter 410 reaches the preset mounting angle. Then, the foregoing steps are repeated sequentially based on an optical path sequence, to adjust the mounting angles of the plurality of filters 41.

S203: Cure the adhesive layer between the side face 4101 of the filter 410 and the mounting surface 102.

For example, a pre-curing operation may be first performed on the adhesive layer between the side face 4101 of the filter 410 and the mounting surface 102. Specifically, the adhesive layer may be cured by using UV light. Then, a further curing operation is performed on the adhesive layer between the side face 4101 of the filter 410 and the mounting surface 102. Specifically, a light curing or thermal curing process may be used.

It should be noted that, in this example, the optical film assembly 4 further includes an isolator 42 and a collimating lens 43 that are shown in FIG. 21. There may be one isolator 42, and the isolator 42 is disposed on emergent optical paths of the first laser emitter 21, the second laser emitter 22, and the third laser emitter 23 in the light emission apparatus 2. Therefore, the first laser emitter 21, the second laser emitter 22, and the third laser emitter 23 may be simultaneously protected from optical signal crosstalk. There may alternatively be three isolators 42. As shown in FIG. 22, the three isolators 42 are a first isolator 42a, a second isolator 42b, and a third isolator 42c. The first isolator 42a is disposed opposite to a light emergent port of the first laser emitter 21, the second isolator 42b is disposed opposite to a light emergent port of the second laser emitter 22, and the third isolator 42c is disposed opposite to a light emergent port of the third laser emitter 23. Therefore, the first isolator 42a may protect the first laser emitter 21 from optical signal crosstalk. The second isolator 42b may protect the second laser emitter 22 from optical signal crosstalk. The third isolator 42c may protect the third laser emitter 23 from optical signal crosstalk.

There may be two collimating lenses 43, and the two collimating lenses 43 are a first collimating lens 431 and a second collimating lens 432. The first collimating lens 431 is disposed at an optical port that is of the optical connector 1 and that is close to an inner cavity of the housing 10. The first collimating lens 431 is configured to convert, into parallel light, converged light led into through the optical connector 1. The second collimating lens 432 is disposed between the eleventh filter 421 and the fifth filter 415. The second collimating lens 432 is configured to convert, from converged light to parallel light, the fourth combined optical signal obtained by the eleventh filter 421 through combination. The first collimating lens 431 is further configured to: convert, into converged light, parallel light emergent via the first filter 411, and lead the converged light into the optical connector 1.

### Example 2

A structure of an optical device 200 in this example is similar to the structure in Example 1, and a difference lies in that any two of a first laser emitter 21, a second laser emitter 22, and a third laser emitter 23 in a light emission apparatus 2 in the optical device 200 in this example are integrally packaged into an integral structure, and the remaining one is independently packaged. Therefore, a degree of integration of the light emission apparatus 2 is high, a volume of the light emission apparatus 2 is reduced, and miniaturization of the optical device 200 is facilitated.

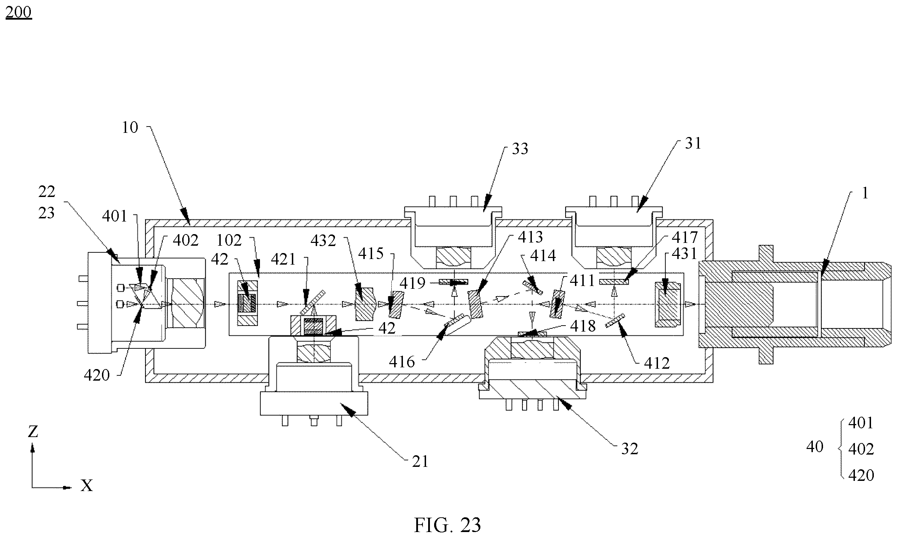

The second laser emitter 22 and the third laser emitter 23 shown in FIG. 23 are packaged into an integral structure. In addition, the second laser emitter 22 and the third laser emitter 23 may be packaged into an integral structure through box packaging or coaxial packaging. The first laser emitter 21 may be packaged through box packaging or coaxial packaging. The second laser emitter 22 and the third laser emitter 23 shown in FIG. 23 are integrated into an integral structure through coaxial packaging, and the first laser emitter 21 is also packaged through coaxial packaging.

Still as shown in FIG. 23, the second laser emitter 22 and the third laser emitter 23 that are packaged into an integral structure may be disposed opposite to an optical connector 1. The first laser emitter 21 is disposed at an interval from the second laser emitter 22 and the third laser emitter 23 that are of the integral structure, and the first laser emitter 21 is located on a side that is of the second laser emitter 22 and the third laser emitter 23 that are of the integral structure and that is close to the optical connector 1.

In addition, the optical device 200 in this example further includes an adjustment support kit 401 and a reflective film 402, and the adjustment support kit 401 may be specifically an adjustment prism. The reflective film 402 and a tenth filter 420 are attached to the adjustment prism, to form a Z-block filter assembly 40. The reflective film 402 is located on an emission optical path of a third laser emitter chip in the second laser emitter 22 and the third laser emitter 23 that are of an integral structure. A reflection optical path of the reflective film 402 intersects with an emission optical path of a second laser emitter chip in the second laser emitter 22 and the third laser emitter 23 that are of an integral structure. The tenth filter 420 is located at an intersection of the reflection optical path of the reflective film 402 and the emission optical path of the second laser emitter chip in the second laser emitter 22 and the third laser emitter 23 that are of an integral structure. An optical signal that is of a third communication protocol and that is emitted by the third laser emitter chip in the second laser emitter 22 and the third laser emitter 23 that are of an integral structure is reflected by the reflective film 402 to the tenth filter 420 by using the adjustment prism. An optical signal that is of a second communication protocol and that is emitted by the second laser emitter chip in the second laser emitter 22 and the third laser emitter 23 that are of an integral structure enters the tenth filter 420. The tenth filter 420 combines the optical signal of the second communication protocol and the optical signal of the third communication protocol into a third combined optical signal, and transmits the third combined optical signal to an eleventh filter 421.

In addition, in some embodiments, as shown in FIG. 23, the Z-block filter assembly 40, the second laser emitter 22, and the third laser emitter 23 are integrated into a same housing.

It may be understood that the adjustment prism may also be replaced with an adjustment support, and the reflective film 402 may also be replaced with a reflector. This is not limited in this application.

### Example 3

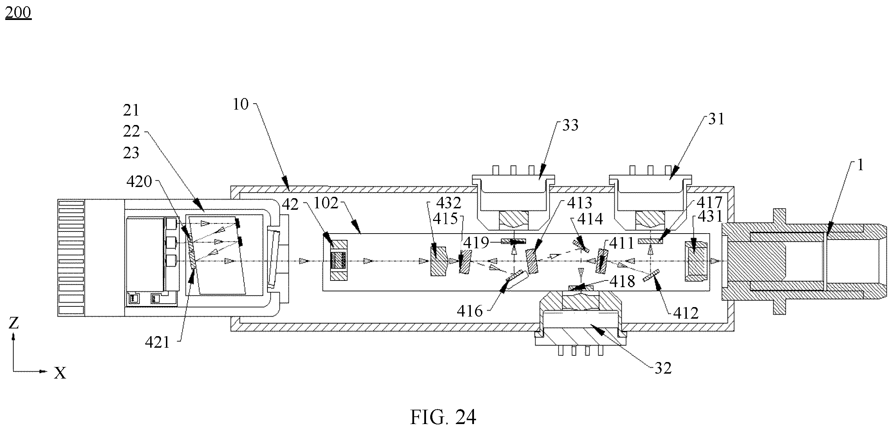

As shown in FIG. 24, an optical device 200 in this example is similar to the structure in Example 1, and a difference lies in that a first laser emitter 21, a second laser emitter 22, and a third laser emitter 23 in a light emission apparatus 2 in the optical device 200 in this example are integrally packaged together. Therefore, a degree of integration of the light emission apparatus 2 is high, a volume of the light emission apparatus 2 is reduced, and miniaturization of the optical device 200 is facilitated.

In addition, the first laser emitter 21, the second laser emitter 22, and the third laser emitter 23 that are integrally packaged into an integral structure may be packaged through box packaging, or may be packaged through coaxial packaging. The first laser emitter 21, the second laser emitter 22, and the third laser emitter 23 shown in FIG. 24 are packaged into an integral structure through box packaging.

Still as shown in FIG. 24, the first laser emitter 21, the second laser emitter 22, and the third laser emitter 23 that are packaged into an integral structure may be disposed opposite to an optical connector 1. In addition, the optical device 200 in this example further includes an adjustment support kit 401, a first reflective film 4021, and a second reflective film 4022, and the adjustment support kit 401 is specifically an adjustment prism. The first reflective film 4021, the second reflective film 4022, a tenth filter 420, and an eleventh filter 421 are all attached to the adjustment prism, to form a Z-block filter assembly 40. The first reflective film 4021 is located on an emission optical path of a third laser emitter chip in the first laser emitter 21, the second laser emitter 22, and the third laser emitter 23 that are of an integral structure. A reflection optical path of the first reflective film 4021 intersects with an emission optical path of a second laser emitter chip in the first laser emitter 21, the second laser emitter 22, and the third laser emitter 23 that are of an integral structure. The tenth filter 420 is located at an intersection of the reflection optical path of the first reflective film 4021 and the emission optical path of the second laser emitter chip in the first laser emitter 21, the second laser emitter 22, and the third laser emitter 23 that are of an integral structure. The second reflective film 4022 is located on a reflection optical path of the tenth filter 420. An emission optical path of a first laser emitter chip in the first laser emitter 21, the second laser emitter 22, and the third laser emitter 23 that are of an integral structure intersects with a reflection optical path of the second reflective film 4022. The eleventh filter 421 is located at an intersection of the emission optical path of the first laser emitter chip in the first laser emitter 21, the second laser emitter 22, and the third laser emitter 23 that are of an integral structure and the reflection optical path of the second reflective film 4022.

An optical signal that is of a third communication protocol and that is emitted by the third laser emitter chip in the first laser emitter 21, the second laser emitter 22, and the third laser emitter 23 that are of an integral structure is reflected by the first reflective film 4021 to the tenth filter 420 by using the adjustment prism. An optical signal that is of a second communication protocol and that is emitted by the second laser emitter chip in the first laser emitter 21, the second laser emitter 22, and the third laser emitter 23 that are of an integral structure enters the tenth filter 420. The tenth filter 420 combines the optical signal of the second communication protocol and the optical signal of the third communication protocol into a third combined optical signal, and transmits the third combined optical signal to the second reflective film 4022 by using the adjustment prism. The second reflective film 4022 reflects the third combined optical signal to the eleventh filter 421. An optical signal that is of a first communication protocol and that is emitted by the first laser emitter chip in the first laser emitter 21, the second laser emitter 22, and the third laser emitter 23 that are of an integral structure enters the eleventh filter 421. The eleventh filter 421 combines the optical signal of the first communication protocol and the third combined optical signal into a fourth combined optical signal, and transmits the fourth combined optical signal to the optical connector 1.

In addition, in some embodiments, as shown in FIG. 24, the Z-block filter assembly 40, the first laser emitter 21, the second laser emitter 22, and the third laser emitter 23 are integrated into a same housing.

It may be understood that the adjustment prism may also be replaced with an adjustment support, and the first reflective film 4021 and the second reflective film 4022 may also be replaced with reflectors. This is not limited in this application.

### Example 4

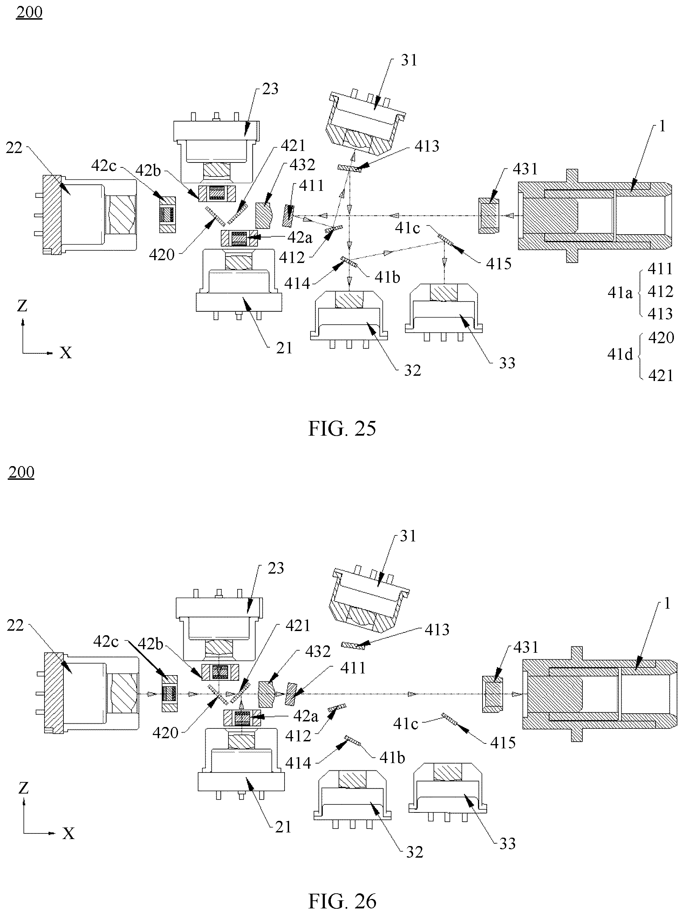

An optical device 200 in this example is similar to a partial structure in Example 1, and a difference lies in that as shown in FIG. 25 and FIG. 26, a first filter group 41a in the optical device 200 in this example includes a first filter 411, a second filter 412, and a third filter 413. The first filter 411, the second filter 412, and the third filter 413 are all located on receiving optical paths of a first optical receiver 31, a second optical receiver 32, and a third optical receiver 33. In addition, the first filter 411, the second filter 412, and the third filter 413 are sequentially distributed in a light incident direction of the first optical receiver 31. The first filter 411 reflects, to the second filter 412, a first combined optical signal that is sent through an optical connector 1 and that includes an optical signal of a first communication protocol, an optical signal of a second communication protocol, and an optical signal of a third communication protocol. The second filter 412 reflects the first combined optical signal to the third filter 413. The third filter 413 separates the optical signal of the first communication protocol from the optical signal of the second communication protocol and the optical signal of the third communication protocol. The third filter 413 may reflect the optical signal of the second communication protocol and the optical signal of the third communication protocol, and allow the optical signal of the first communication protocol to be transmitted to the first optical receiver 31.

A second filter group 41b includes a fourth filter 414, and the fourth filter 414 is located on an optical path from the third filter 413 to the second optical receiver 32. The fourth filter 414 may reflect the optical signal that is of the third communication protocol and that is reflected by the third filter 413, and allow the optical signal of the second communication protocol to be transmitted to the second optical receiver 32. Therefore, the fourth filter 414 may separate the optical signal of the second communication protocol and the optical signal of the third communication protocol that are reflected by the third filter 413.

A third filter group 41c includes a fifth filter 415, and the fifth filter 415 is located on an optical path from the fourth filter 414 to the third optical receiver 33. The fifth filter 415 may reflect, to the third receiver 33, the optical signal that is of the third communication protocol and that is reflected by the fourth filter 414.

Compared with Example 1, in this example, an optical receiving apparatus 3 requires a small quantity of filters 410, and this is applicable to an application scenario in which a spacing between the first optical receiver 31, the second optical receiver 32, and the third optical receiver 33 is small on a housing 10.

It may be understood that, when distribution locations of the first optical receiver 31, the third optical receiver 33, and the second optical receiver 32 on the housing 10 are exchanged, a correspondence between the first filter group 41a, the second filter group 41b, and the third filter group 41c and optical paths of the first optical receiver 31, the second optical receiver 32, and the third optical receiver 33 also changes correspondingly. Details are not described herein again.

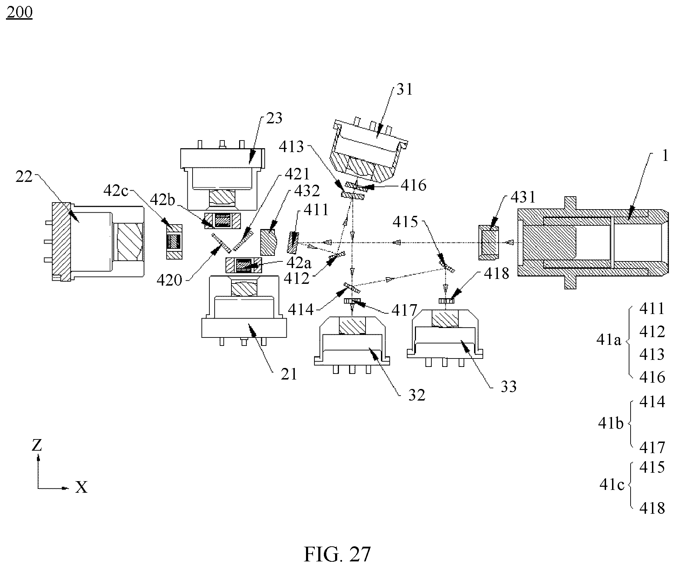

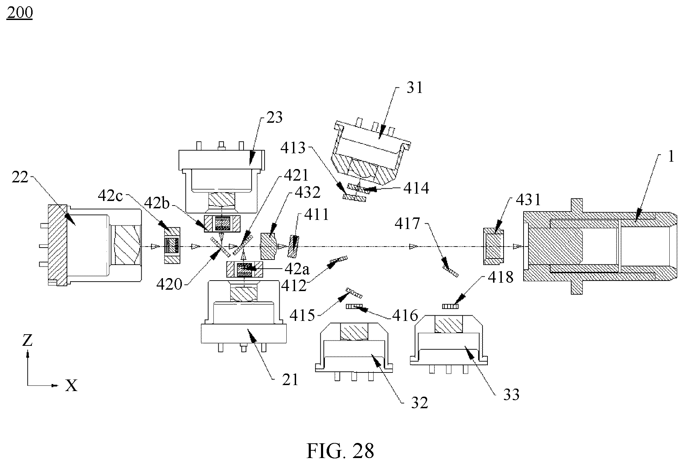

Based on disposing of the plurality of filters 41, in some embodiments of this example, as shown in FIG. 27 and FIG. 28, the first filter group 41a further includes a sixth filter 416, and the sixth filter 416 is located on a transmission optical path of the third filter 413, and is disposed opposite to the first optical receiver 31, to prevent an impurity optical signal from entering the first optical receiver 31, the second optical receiver 32, and the third optical receiver 33. The sixth filter 416 may filter out an impurity optical signal in the optical signal that is of the first communication protocol and that is transmitted by the third filter 413, and transmit the filtered optical signal to the first optical receiver 31.

The second filter group 41a further includes a seventh filter 417, and the seventh filter 417 is located on a transmission optical path of the fourth filter 414, and is disposed opposite to the second optical receiver 32. The seventh filter 417 may filter out an impurity optical signal in the optical signal that is of the second communication protocol and that is transmitted by the fourth filter 414, and transmit the filtered optical signal to the second optical receiver 32.

The third filter group 41c further includes an eighth filter 418, and the eighth filter 418 is located on a reflection optical path of the fifth filter 415, and is disposed opposite to the third optical receiver 33. The eighth filter 418 may filter out an impurity optical signal in the optical signal that is of the third communication protocol and that is reflected by the fifth filter 415, and transmit the filtered optical signal to the third optical receiver 33.

In addition, the first filter 411 is located on a light emergent path of each of the first laser emitter 21, the second laser emitter 22, and the third laser emitter 23. The first filter 411 may further allow, to be transmitted to the optical connector 1, the optical signal that is of the first communication protocol and that is emitted by the first laser emitter 21, the optical signal that is of the second communication protocol and that is emitted by the second laser emitter 22, and the optical signal that is of the third communication protocol and that is emitted by the third laser emitter 23. Therefore, a fourth combined optical signal led out from the eleventh filter 421 may be transmitted to the optical connector 1 sequentially through the first filter 411.

Based on the foregoing descriptions, the foregoing eight filters may also be connected to the housing 10 in a side mounting manner. Such a mounting solution is similar to that in Example 1, and assembling and debugging may be performed sequentially in a sequence of the first filter 411, the second filter 412, the third filter 413, the sixth filter 416, the fourth filter 414, the seventh filter 417, the fifth filter 415, and the eighth filter 418. Details are not described herein again.

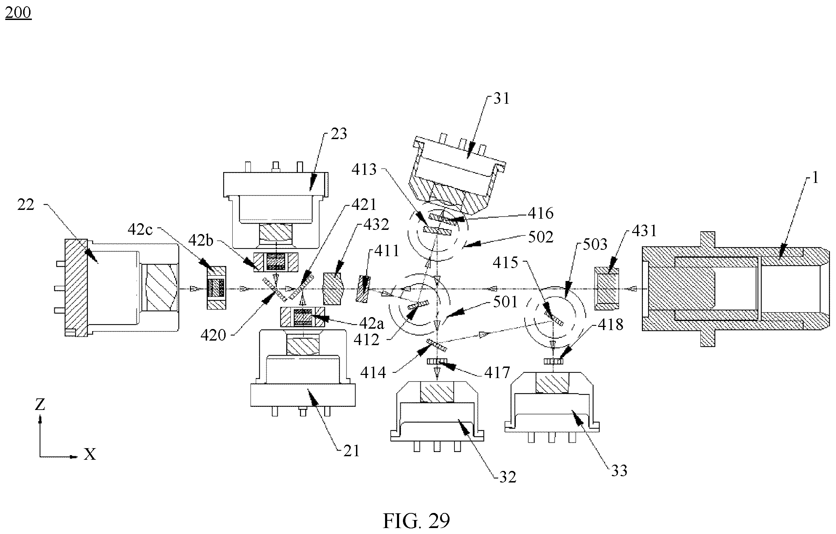

Internal space of the optical device 200 shown in FIG. 28 is small, and eight adjustment frames 5 cannot be disposed in the housing 10 to mount the eight filters 41 respectively. Therefore, three adjustment frames 5 may be disposed in the housing 10. As shown in FIG. 29, the three adjustment frames 5 are a first adjustment frame 501, a second adjustment frame 502, and a third adjustment frame 503. The second filter 412 is mounted on the first adjustment frame 501, the third filter 413 is mounted on the second adjustment frame 502, and the fifth filter 415 is mounted on the third adjustment frame 503. Therefore, even if the first filter 411 has a mounting error, because the second filter 412, the third filter 413, and the fifth filter 415 are mounted precisely, neither the second filter 412 nor the third filter 413 increases the mounting error of the first filter 411 during reflection, and the fifth filter 415 does not increase a mounting error of the fourth filter 414 during reflection. Therefore, the mounting error of the plurality of filters 41 may be reduced to a value less than ±0.3°, to ensure demultiplexing accuracy of the filter 410 in the optical device 200. Alternatively, the fourth filter 414 may be mounted on the third adjustment frame 503, to achieve the foregoing technical effect.

In addition, a manner of assembling and debugging the three adjustment frames 5 and the housing 10 is the same as that in Example 1, and assembling and debugging may be sequentially performed in a sequence of the first adjustment frame 501, the second adjustment frame 502, and the third adjustment frame 503. Details are not described herein again.

### Example 5

A structure of an optical device 200 in this example is similar to a partial structure in Example 4, and a difference lies in that any two of a first optical receiver 31, a second optical receiver 32, and a third optical receiver 33 of an optical receiving apparatus 3 in the optical device 200 in this example are integrally packaged into an integral structure, and the remaining one is independently packaged. Therefore, a degree of integration of the optical receiving apparatus 3 is high, a volume of the optical receiving apparatus 3 is reduced, and miniaturization of the optical device 200 is facilitated.

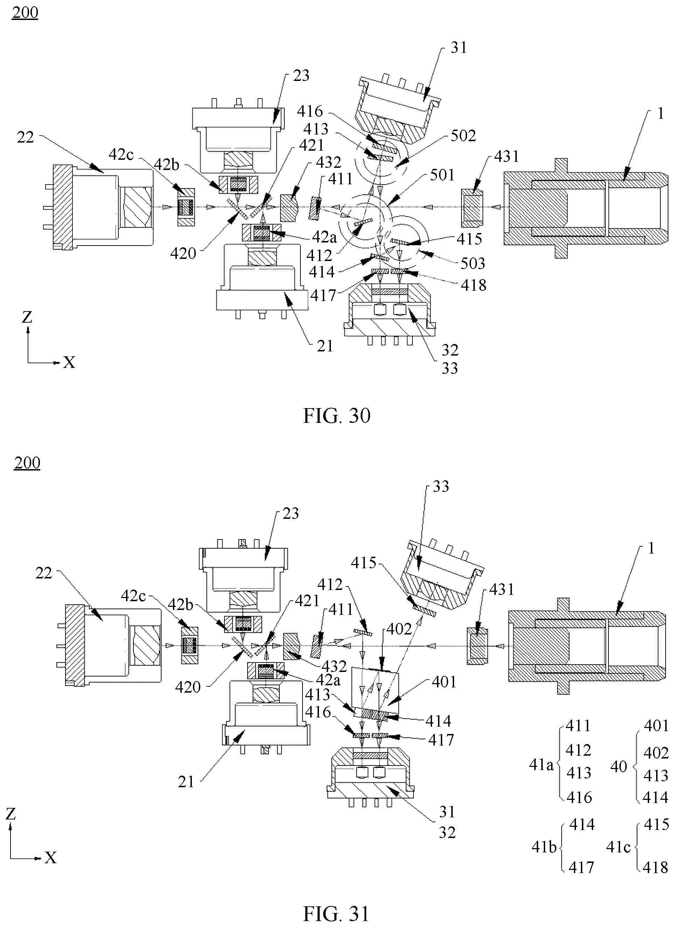

As shown in FIG. 30, the second optical receiver 32 and the third optical receiver 33 in the optical receiving apparatus 3 are integrally packaged into an integral structure, and the first optical receiver 31 is independently packaged. In addition, the second optical receiver 32 and the third optical receiver 33 are packaged into an integral structure through box packaging or coaxial packaging. The first optical receiver 31 is packaged through box packaging or coaxial packaging.

A seventh filter 417 in a second filter group 41b is disposed opposite to a second optical chip in the second optical receiver 32 and the third optical receiver 33 that are of an integral structure. The second filter group 41b may lead an optical signal of a second communication protocol into a second optical chip in the second optical receiver 32 and the third optical receiver 33 that are of an integral structure, and reflect the optical signal of the second communication protocol to a third filter group 41c. Therefore, the second filter group 41b may separate the optical signal of the second communication protocol from an optical signal of a third communication protocol.

An eighth filter 418 in the third filter group 41c is disposed opposite to a third optical chip in the second optical receiver 32 and the third optical receiver 33 that are of an integral structure. The third filter group 41c may lead the optical signal of the third communication protocol into the third optical chip in the second optical receiver 32 and the third optical receiver 33 that are of an integral structure.

### Example 6

An optical device 200 in this example is similar to a partial structure in Example 4, and a difference lies in that as shown in FIG. 31, a first optical receiver 31 and a second optical receiver 32 in an optical receiving apparatus 3 in the optical device 200 in this example are integrally packaged into an integral structure, and a third optical receiver 33 is independently packaged. In addition, the first optical receiver 31 and the second optical receiver 32 are packaged into an integral structure through box packaging or coaxial packaging. The third optical receiver 33 is packaged through box packaging or coaxial packaging.

In this example, a first filter group 41a includes a first filter 411, a second filter 412, a third filter 413, and a sixth filter 416. A second filter group 41b includes a fourth filter 414 and a seventh filter 417. The optical device 200 further includes an adjustment support kit 401 and a reflective film 402. The adjustment support kit 401 is specifically an adjustment prism. The third filter 413, the fourth filter 414, and the reflective film 402 are all disposed on the adjustment support kit 401, to form a Z-block filter assembly 40.

The first filter 411, the second filter 412, the third filter 413, and the sixth filter 416 in the first filter group 41a are all located on a receiving optical path of the first optical receiver 31, and are sequentially disposed in a light incident direction of the first optical receiver 31. The first filter 411 reflects, to the second filter 412, a first combined optical signal that is sent through an optical connector 1 and that includes an optical signal of a first communication protocol, an optical signal of a second communication protocol, and an optical signal of a third communication protocol. The second filter 412 reflects the first combined optical signal to the third filter 413 by using the adjustment prism. The third filter 413 reflects the optical signal of the second communication protocol and the optical signal of the third communication protocol, and allows the optical signal of the first communication protocol to be transmitted to the sixth filter 416. Therefore, the third filter 413 separates the optical signal of the first communication protocol from the optical signal of the second communication protocol and the optical signal of the third communication protocol. The sixth filter 416 is disposed opposite to a first optical chip in the first optical receiver 31 and the second optical receiver 32 that are of an integral structure. The sixth filter 416 filters out an impurity optical signal in the optical signal that is of the first communication protocol and that is emitted by the third filter 413, and transmits the filtered optical signal to the first optical receiver 31.

The reflective film 402 is attached to or formed on a partial surface on which the adjustment prism is located on a reflection optical path of the third filter 413. The fourth filter 414 in the second filter group 41b is located on a receiving optical path of the second optical receiver 32. In addition, the fourth filter 414 is attached to a partial surface on which the adjustment prism is located on a reflection optical path of the reflective film 402. The seventh filter 417 is disposed opposite to a second optical chip in the first optical receiver 31 and the second optical receiver 32 that are of an integral structure. The fourth filter 414 and the seventh filter 417 are sequentially disposed in a light incident direction of the second optical receiver 32. The reflective film 402 reflects, to the fourth filter 414, a second combined optical signal that includes the optical signal of the second communication protocol and the optical signal of the third communication protocol and that is reflected by the third filter 413. The fourth filter 414 may reflect the optical signal of the third communication protocol to the seventh filter 417, and allow the optical signal of the second communication protocol to be transmitted to the seventh filter 417. Therefore, the fourth filter 414 may separate the optical signal of the second communication protocol and the optical signal of the third communication protocol. The seventh filter 417 may filter out an impurity optical signal in the optical signal that is of the second communication protocol and that is emitted by the fourth filter 414, and transmit the filtered optical signal to the second optical receiver 32.

A third filter group 41c includes a fifth filter 415, and the fifth filter 415 is located on a reflection optical path of the fourth filter 414 and is disposed opposite to the third optical receiver 33. The fifth filter 415 may filter out an impurity optical signal in the optical signal that is of the third communication protocol and that is reflected by the fourth filter 414, and transmit the filtered optical signal to the third optical receiver 33.

Compared with Example 5, in this example, a quantity of filters 410 required by the optical receiving apparatus 3 in this example is reduced to 7. In addition, a distribution manner of an optical film assembly 4 in this example is applicable to a scenario in which any two of the first optical receiver 31, the second optical receiver 32, and the third optical receiver 33 are integrated into an integral structure.

In addition, similarly, the first filter 411 is located on a light emergent path of the first laser emitter 21, a light emergent path of the second laser emitter 22, and a light emergent path of the third laser emitter 23. The first filter 411 may further allow, to be transmitted to the optical connector 1, the combined optical signal of the optical signal that is of the first communication protocol and that is emitted by the first laser emitter 21, the optical signal that is of the second communication protocol and that is emitted by the second laser emitter 22, and the optical signal that is of the third communication protocol and that is emitted by the third laser emitter 23.

It may be understood that the adjustment prism may also be replaced with an adjustment support, and the reflective film 402 may also be replaced with a reflector. This is not limited in this application.

In addition, the Z-block filter assembly 40 and a housing 10 may be assembled in the following assembling method:
S301: Movably mount the filter 410 and the Z-block filter assembly 40 at preset mounting locations in the housing 10.

For example, mounting locations and mounting angles of the plurality of filters 41 and the Z-block filter assembly 40 in the housing 10 are designed based on distribution locations of a light emission apparatus 2 and the optical receiving apparatus 3 in the housing 10, to ensure a demultiplexing feature of the plurality of filters 41. The mounting location is a preset mounting location, and the mounting angle is a preset mounting angle. Glue dispensing is performed at a plurality of preset mounting locations on an inner wall of the housing 10.

S302: Input detection light into the optical connector 1, and adjust a mounting angle of the Z-block filter assembly 40 in the housing 10, until an angle at which a beam is led out when the detection light passes through another filter 410 and the filter 410 in the Z-block filter assembly 40 reaches a preset light emergent angle.

For example, one side face of the Z-block filter assembly 40 is attached to an adhesive layer on a mounting surface 102. The mounting angle of the filter 410 is adjusted by using a sideline or a corner of the adjustment prism as a mounting reference, until the mounting angle of the filter 410 reaches the preset mounting angle. A process of assembling and debugging the remaining filters 410 and the inner wall of the housing 10 may be the same as a side mounting process of the filters 410 in Example 1. Details are not described herein again. The remaining filters 410 may be directly fastened to the housing 10 by using a fastening frame 101, or may be connected to the inner wall of the housing 10 by using a side mounting manner.

S303: Fasten the Z-block filter assembly 40 and the housing 10.

For example, a pre-curing operation may be first performed on an adhesive layer between the Z-block filter assembly 40 and the inner wall of the housing 10, and an adhesive layer between the inner wall of the housing 10 and side faces of the plurality of filters 41. Specifically, the adhesive layer may be cured by using UV light. Then, a further curing operation is performed on the adhesive layer between the Z-block filter assembly 40 and the inner wall of the housing 10, and the adhesive layer between the inner wall of the housing 10 and the side faces 4101 of the plurality of filters 41. Specifically, a light curing or thermal curing process may be used.

### Example 7

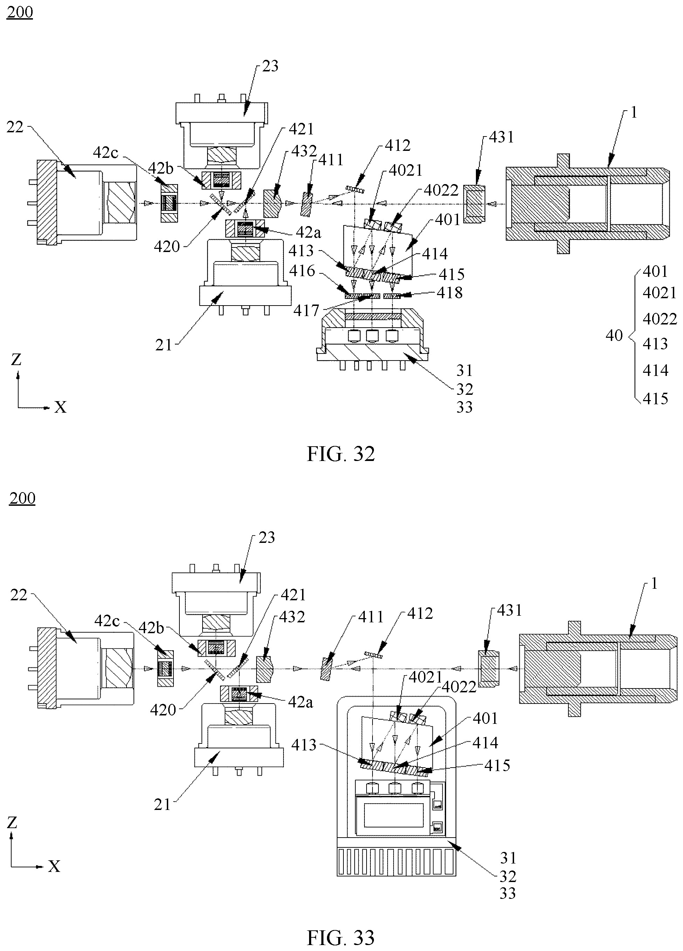

A structure of an optical device 200 in this example is similar to the structure in Example 6, and a difference lies in that as shown in FIG. 32, an optical receiving apparatus 3 of the optical device 200 in this example includes a first optical receiver 31, a second optical receiver 32, and a third optical receiver 33 that are integrated into an integral structure. A packaging form of the optical receiving apparatus 3 may be box packaging, or may be coaxial packaging. Therefore, a degree of integration of the optical receiving apparatus 3 is high, a volume of the optical receiving apparatus 3 is reduced, and miniaturization of the optical device 200 is facilitated.

Still as shown in FIG. 32, a Z-block filter assembly 40 in this example further includes a first reflective film 4021, a second reflective film 4022, and a fifth filter 415 in a third filter group 41c. The first reflective film 4021 is located on a partial surface on which an adjustment prism is located on a reflection optical path of the third filter 413. A fourth filter 414 is located on a partial surface on which the adjustment prism is located on a reflection optical path of the first reflective film 4021. The second reflective film 4022 is located on a partial surface on which the adjustment prism is located on a reflection optical path of the fourth filter 414. The fifth filter 415 is located on a partial surface on which the adjustment prism is located on a reflection optical path of the second reflective film 4022. A specific optical path is similar to that in the foregoing examples, and is not described herein again.

The third filter group 41c further includes an eighth filter 418, and the eighth filter 418 is disposed opposite to a third optical chip in the first optical receiver 31, the second optical receiver 32, and the third optical receiver 33 that are of an integral structure. The eighth filter 418 filters out an impurity optical signal in an optical signal that is of a third communication protocol and that is transmitted by the third filter 413, and transmit the filtered optical signal to the third optical receiver 33.

### Example 8

A structure of an optical device 200 in this example is similar to the structure in Example 7, and a difference lies in that, as shown in FIG. 33, a Z-block filter assembly 40 of the optical device 200 in this example, a first optical receiver 31, a second optical receiver 32, and a third optical receiver 33 are integrated into an integral structure. A packaging form shown in FIG. 33 is box packaging. In this case, a sixth filter 416, a seventh filter 417, and an eighth filter 418 do not need to be disposed.

### Example 9

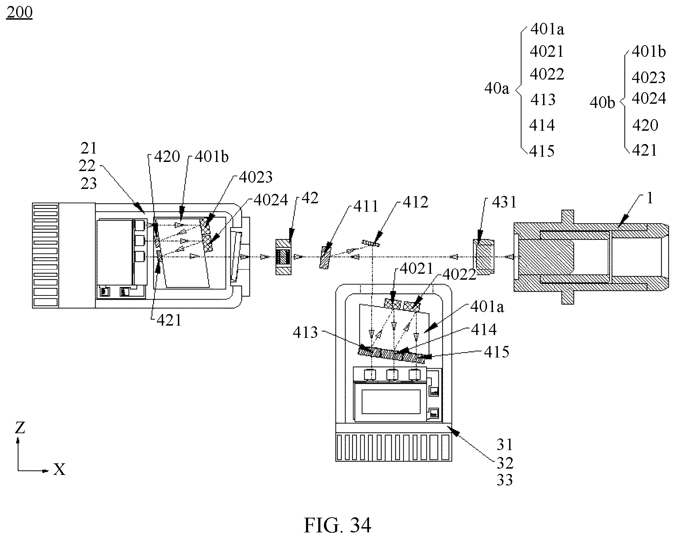

A structure of an optical device 200 in this example is similar to the structure in Example 8, and a difference lies in that, as shown in FIG. 34, a first laser emitter 21, a second laser emitter 22, and a third laser emitter 23 in a light emission apparatus 2 in the optical device 200 in this example are integrally packaged together. Therefore, a degree of integration of the light emission apparatus 2 is high, a volume of the light emission apparatus 2 is reduced, and miniaturization of the optical device 200 is further facilitated.

In addition, the optical device 200 in this example includes a first Z-block filter assembly 40a and a second Z-block filter assembly 40b, a composition of the first Z-block filter assembly 40a is the same as a composition of the Z-block filter assembly 40 in Example 8, and an adjustment support kit in the first Z-block filter assembly 40a is a first adjustment support kit 401a. The first Z-block filter assembly 40a, a first optical receiver 31, a second optical receiver 32, and a third optical receiver 33 are integrated into an integral structure.

The second Z-block filter assembly 40b, the first laser 21, the second laser 22, and the third laser 23 are integrated into an integral structure. The second Z-block filter assembly 40b includes a second adjustment support kit 401b, a third reflective film 4023, a fourth reflective film 4024, a tenth filter 420, and an eleventh filter 421. The second adjustment support kit 401b is specifically an adjustment prism. The third reflective film 4023 is located on a partial surface on which the second adjustment support kit 401b is located on an emission optical path of the first laser 21. The tenth filter 420 is located on a partial surface in which the second adjustment support kit 401b is located on an emission optical path of the third reflective film 4023.

An optical signal that is of a third communication protocol and that is emitted by a third laser emitter chip in the first laser emitter 21, the second laser emitter 22, and the third laser emitter 23 that are of an integral structure is reflected by the third reflective film 4023 to the tenth filter 420 by using the second adjustment support kit 401b. The tenth filter 420 combines, into a third combined optical signal, an optical signal that is of a second communication protocol and that is emitted by a second laser emitter chip and the optical signal that is of the third communication protocol and that is emitted by the third laser emitter chip in the first laser emitter 21, the second laser emitter 22, and the third laser emitter 23 that are of an integral structure, and reflects the third combined optical signal.

The fourth reflective film 4024 is located on a partial surface on which the second adjustment support kit 401b is located on a reflection optical path of the tenth filter 420. The eleventh filter 421 is located on a partial surface on which the second adjustment support kit 401b is located on a reflection optical path of the fourth reflective film 4024.

The fourth reflective film 4024 reflects the third combined optical signal to the eleventh filter 421. The eleventh filter 421 combines, into a fourth combined optical signal, the third combined optical signal and an optical signal that is of a first communication protocol and that is emitted by a first laser emitter chip in the first laser emitter 21, the second laser emitter 22, and the third laser emitter 23 that are of an integral structure, and transmits the fourth combined optical signal to an optical connector 1.

In addition, the second Z-block filter assembly 40b, the first laser emitter 21, the second laser emitter 22, and the third laser emitter 23 are integrally packaged into an integral structure. A packaging form shown in FIG. 34 is box packaging.

It may be understood that the adjustment prism may also be replaced with an adjustment support, and the third reflective film 4023 and the fourth reflective film 4024 may also be replaced with reflectors. This is not limited in this application.

### Example 10

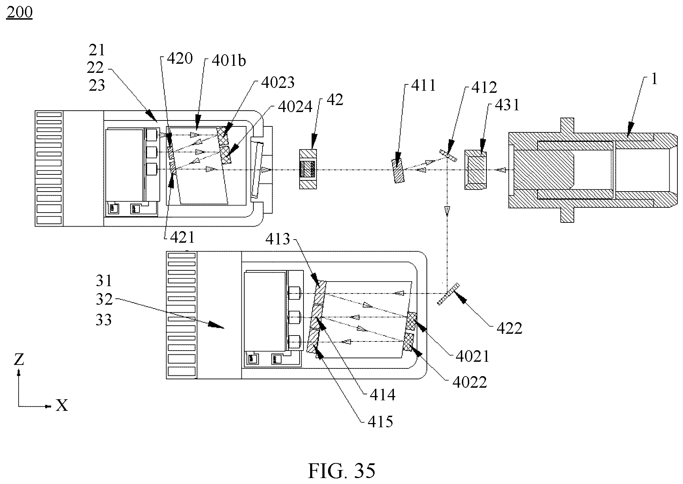

A structure of an optical device 200 in this example is similar to the structure in Example 9, and a difference lies in that as shown in FIG. 35, a light emergent port of a light emission apparatus 2 of an integral structure in the optical device 200 in this example and a light incident port of an optical receiving apparatus 3 of an integral structure face a same direction. In addition, a first filter group 41a further includes a twelfth filter 422, the twelfth filter 422 is disposed on an optical path between a second filter 412 and a third filter 413, and is configured to reflect, to the third filter 413, a first combined optical signal that is reflected by the second filter 412 and that includes an optical signal of a first communication protocol, an optical signal of a second communication protocol, and an optical signal of a third communication protocol.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical device, comprising:
an optical connector;
a light emission apparatus, wherein the light emission apparatus comprises a first laser emitter, a second laser emitter, and a third laser emitter, and the first laser emitter, the second laser emitter, and the third laser emitter are respectively configured to emit optical signals of three different communication protocols;
an optical receiving apparatus, wherein the optical receiving apparatus comprises a first optical receiver, a second optical receiver, and a third optical receiver, and the first optical receiver, the second optical receiver, and the third optical receiver are respectively configured to receive optical signals of the three different communication protocols; and
a plurality of filters, wherein the plurality of filters comprise:
a first filter group, wherein the first filter group is located on a receiving optical path of the first optical receiver, and is configured to: lead, into the first optical receiver, an optical signal of a first communication protocol in the optical signals that comprise the three different communication protocols and that are led into from the optical connector, and lead out an optical signal of a second communication protocol and an optical signal of a third communication protocol in the optical signals that comprise the three different communication protocols;
a second filter group, wherein the second filter group is located on an optical path from the first filter group to the second optical receiver, and is configured to: lead, into the second optical receiver, the optical signal that is of the second communication protocol and that is led out from the first filter group, and lead out the optical signal of the third communication protocol;
a third filter group, wherein the third filter group is located on an optical path from the second filter group to the third optical receiver, and is configured to lead, into the third optical receiver, the optical signal that is of the third communication protocol and that is led out from the second filter group; and
a fourth filter group, wherein the fourth filter group is located on emergent optical paths of the first laser emitter, the second laser emitter, and the third laser emitter, and the fourth filter group is configured to: combine an optical signal that is of a first communication protocol and that is emitted by the first laser emitter, an optical signal that is of a second communication protocol and that is emitted by the second laser emitter, and an optical signal that is of a third communication protocol and that is emitted by the third laser emitter, and lead a combined optical signal into the optical connector.

2. The optical device according to claim 1, wherein the optical device further comprises a housing, the plurality of filters are all located in the housing, a mounting surface is formed on an inner wall of the housing, and a side face of at least one of the plurality of filters is bonded to the mounting surface.

3. The optical device according to claim 1 or 2, wherein the optical device further comprises:
the housing, wherein the plurality of filters are all located in the housing; and
a Z-block filter assembly, wherein the Z-block filter assembly comprises at least one of the plurality of filters and an adjustment support kit, all filters in the Z-block filter assembly are disposed on the adjustment support kit, and the adjustment support kit is bonded to the housing.

4. The optical device according to any one of claims 1 to 3, wherein the optical device further comprises:
the housing, wherein the plurality of filters are all located in the housing; and
at least one adjustment frame, wherein the at least one adjustment frame is connected to the inner wall of the housing, and at least one of the plurality of filters is separately disposed on the at least one adjustment frame.

5. The optical device according to any one of claims 1 to 4, wherein the first filter group comprises a first filter and a second filter that are sequentially disposed in a light incident direction of the first optical receiver; the first filter is disposed opposite to the optical connector, and is configured to: reflect, to the second filter, the optical signal of the first communication protocol in the optical signals that comprise the three different communication protocols and that are led into through the optical connector, and allow transmission of the optical signal of the second communication protocol and the optical signal of the third communication protocol in the optical signals that comprise the three different communication protocols; and the second filter is configured to reflect, to the first optical receiver, the optical signal reflected by the first filter;
the second filter group comprises a third filter and a fourth filter that are sequentially disposed in a light incident direction of the second optical receiver; the third filter is located on a transmission optical path of the first filter, and is configured to: reflect, to the fourth filter, the optical signal that is of the second communication protocol and that is transmitted by the first filter, and allow transmission of the optical signal of the third communication protocol; and the fourth filter is configured to reflect, to the second optical receiver, the optical signal reflected by the third filter; and
the third filter group comprises a fifth filter and a sixth filter that are sequentially disposed in a light incident direction of the third optical receiver; the fifth filter is located on a transmission optical path of the third filter, and is configured to reflect, to the sixth filter, the optical signal that is of the third communication protocol and that is transmitted by the third filter; and the sixth filter is configured to reflect, to the third optical receiver, the optical signal reflected by the fifth filter.

6. The optical device according to claim 5, wherein the first filter group further comprises a seventh filter located on a reflection optical path of the second filter; and the seventh filter is disposed opposite to the first optical receiver, and is configured to: filter out an impurity optical signal in the optical signal reflected by the second filter, and allow the filtered optical signal to be transmitted to the first optical receiver;
the second filter group further comprises an eighth filter located on a reflection optical path of the fourth filter;
and the eighth filter is disposed opposite to the second optical receiver, and is configured to: filter out an impurity optical signal in the optical signal reflected by the fourth filter, and allow the filtered optical signal to be transmitted to the second optical receiver; and
the third filter group further comprises a ninth filter located on a reflection optical path of the sixth filter; and the ninth filter is disposed opposite to the third optical receiver, and is configured to: filter out an impurity optical signal in the optical signal reflected by the sixth filter, and allow the filtered optical signal to be transmitted to the third optical receiver.

7. The optical device according to claim 5 or 6, wherein the optical device further comprises:
the housing, wherein the plurality of filters are all located in the housing; and
three adjustment frames, wherein the three adjustment frames are all connected to the inner wall of the housing, and the three adjustment frames are:
a first adjustment frame, wherein the second filter is mounted on the first adjustment frame;
a second adjustment frame, wherein the fourth filter is mounted on the second adjustment frame; and
a third adjustment frame, wherein the sixth filter is mounted on the third adjustment frame.

8. The optical device according to any one of claims 1 to 4, wherein the first filter group comprises a first filter, a second filter, and a third filter that are sequentially disposed in a light incident direction of the first optical receiver; the first filter is disposed opposite to the optical connector, and the first filter is configured to reflect, to the second filter, the optical signals that comprise the three different communication protocols and that are led into through the optical connector; the second filter is configured to reflect, to the third filter, the optical signals that comprise the three different communication protocols; and the third filter is configured to: reflect the optical signal of the second communication protocol and the optical signal of the third communication protocol in the optical signals that comprise the three different communication protocols and that are reflected by the second filter, and allow the optical signal of the first communication protocol to be transmitted to the first optical receiver;
the second filter group comprises a fourth filter located on an optical path from the third filter to the second optical receiver; and the fourth filter is configured to: reflect the optical signal of the second communication protocol in the optical signals reflected by the third filter, and allow the optical signal of the second communication protocol to be transmitted to the second optical receiver; and
the third filter group comprises a fifth filter located on an optical path from the fourth filter to the third optical receiver; and the fifth filter is configured to reflect, to the third optical receiver, the optical signal that is of the third communication protocol and that is reflected by the fourth filter.

9. The optical device according to claim 8, wherein the first filter group further comprises a sixth filter located on a transmission optical path of the third filter; and the sixth filter is disposed opposite to the first optical receiver, and is configured to: filter out an impurity optical signal in the optical signal transmitted by the third filter, and transmit the optical signal to the first optical receiver;
the second filter group further comprises a seventh filter located on a transmission optical path of the fourth filter; and the seventh filter is disposed opposite to the second optical receiver, and is configured to filter out an impurity optical signal in the optical signal transmitted by the fourth filter, and transmit the optical signal to the second optical receiver; and
the third filter group further comprises an eighth filter located on a reflection optical path of the fifth filter; and the eighth filter is disposed opposite to the third optical receiver, and is configured to: filter out an impurity optical signal in the optical signal reflected by the fifth filter, and transmit the optical signal to the third optical receiver.

10. The optical device according to claim 8 or 9, wherein the optical device further comprises:
the housing, wherein the plurality of filters are all located in the housing; and
three adjustment frames, wherein the three adjustment frames are all connected to the inner wall of the housing, and the three adjustment frames are:
a first adjustment frame, wherein the second filter is mounted on the first adjustment frame;
a second adjustment frame, wherein the third filter is mounted on the second adjustment frame; and
a third adjustment frame, wherein the fourth filter or the fifth filter is mounted on the third adjustment frame.

11. The optical device according to any one of claims 1 to 10, wherein an optical path from the second laser emitter to the optical connector intersects with an optical path from the third laser emitter to the optical connector, and the fourth filter group further comprises:
a tenth filter, wherein the tenth filter is disposed at an intersection of the optical path from the second laser emitter to the optical connector and the optical path from the third laser emitter to the optical connector; the tenth filter is configured to combine and lead out the optical signal that is of the second communication protocol and that is emitted by the second laser emitter and the optical signal that is of the third communication protocol and that is emitted by the third laser emitter; and an optical path from the first laser emitter to the optical connector intersects with an emergent optical path of the tenth filter; and
an eleventh filter, wherein the eleventh filter is disposed at an intersection of the optical path from the first laser emitter to the optical connector and the emergent optical path of the tenth filter, and is configured to: combine an optical signal led out from the tenth filter and the optical signal that is of the first communication protocol and that is emitted by the first laser emitter, and lead a combined optical signal into the optical connector.

12. The optical device according to any one of claims 1 to 11, wherein any two of the first laser emitter, the second laser emitter, and the third laser emitter are integrally packaged into an integral structure; or the first laser emitter, the second laser emitter, and the third laser emitter are integrally packaged into an integral structure.

13. The optical device according to any one of claims 1 to 12, wherein any two of the first optical receiver, the second optical receiver, and the third optical receiver are integrally packaged into an integral structure; or any two of the first optical receiver, the second optical receiver, and the third optical receiver are integrally packaged into an integral structure.

14. The optical device according to any one of claims 1 to 13, wherein the first laser emitter, the second laser emitter, the third laser emitter, the first optical receiver, the second optical receiver, and the third optical receiver each are packaged through coaxial packaging or box packaging.

15. An optical communication device, comprising:
a circuit board; and
the optical device according to any one of claims 1 to 14, wherein the optical device is electrically connected to the circuit board.

16. An assembling method for the optical device according to any one of claims 4, 7, and 10, comprising:
mounting a plurality of filters at preset reference locations in a housing, wherein at least one filter is fixedly mounted on an adjustment frame, and the adjustment frame is movably connected to the housing;
inputting detection light into an optical connector, and sequentially adjusting mounting angles of the filters by using the adjustment frame in an optical path sequence, until an angle at which a beam of the detection light led out from or led into the plurality of filters reaches a preset angle; and
fastening the adjustment frame to the housing.
